# EUROPEAN PATENT APPLICATION

(11) **EP 4 807 509 A1**
(43) Date of publication of application: **16.09.2026**
(21) Application number: 23962837.3
(22) Date of filing: 29.12.2023
(51) Int. Cl.: G06F 3/04817

(54) **DISPLAY CONTROL METHOD AND ELECTRONIC DEVICE**

(71) Applicant: Honor Device Co., Ltd., Shenzhen, Guangdong 518040 (CN)
(72) Inventor: YANG, Yuanyuan, Shenzhen, Guangdong 518040 (CN); HUANG, Liwei, Shenzhen, Guangdong 518040 (CN); LIANG, Shuang, Shenzhen, Guangdong 518040 (CN)
(74) Representative: Gill Jennings & Every LLP
(86) International application number: PCT/CN2023/143416
(87) International publication number: WO 2025/138163

(57) **Abstract**

Embodiments of this application relate to the field of terminal technologies, and provide a display control method and an electronic device, to resolve a problem of human computer interaction after the electronic device is folded. A specific solution includes: displaying a first application interface of a first application in a first display region of a first display screen; displaying a first display object corresponding to a second application in a second display region of the first display screen, where the first display region and the second display region are different display regions on the first display screen; and moving, in response to a first operation performed by a user on the first display object, the first application interface from the first display region to the second display region, and displaying a second application interface of the second application in the first display region, where after a preset duration or upon completion of execution of a service corresponding to the first application, the first application is switched to a background for running.

## Description

### TECHNICAL FIELD

This application relates to the field of terminal technologies, and in particular, to a display control method and an electronic device.

### BACKGROUND

With the advent of a flexible display screen, foldable screen technologies have gradually matured, and are widely applied to various electronic devices. Compared with an electronic device not configured with a foldable screen, the electronic device configured with the foldable screen (for example, referred to as a foldable screen device) improves portable performance of the electronic device when a display area is not reduced.

However, the foldable screen device has poor operability after the foldable screen is folded. In other words, when the foldable screen device is in a folded state, human computer interaction efficiency is reduced.

### SUMMARY

In view of the above, this application provides a display control method and an electronic device, to improve human computer interaction efficiency of a foldable screen device in a folded state.

To achieve the foregoing objective, the following technical solutions are used in embodiments of this application.

According to a first aspect, a display control method provided in embodiments of this application is applied to a foldable electronic device. After the electronic device is folded, a first display screen of the electronic device is visible.

For example, the foregoing first display screen may be a display screen that is visible and operable to a user after the electronic device is folded, for example, may be an outer screen of the electronic device.

The foregoing first display screen includes a first display region and a second display region. After the electronic device is folded, a first application interface of a first application may be displayed on the first display region of the first display screen. An application (for example, the first application) displayed by the first display region is an application that the user currently needs to use.

A first display object corresponding to the second application is displayed on the second display region of the first display screen. An application (for example, the second application) displayed by the second display region is an application that is not currently used by the user, but an application state needs to be refreshed in real time for the user to view or enable at any time by the user.

For example, the foregoing first display object includes a state capsule corresponding to the second application, a second application interface, and the like. The user learns a real-time running state of the second application through the content of the first display object.

For another example, the foregoing first display object further includes an icon corresponding to the second application and the like. The user may enable the second application at any time through the first display object.

In some embodiments, in response to a first operation performed by the user on the first display object, the first application interface is moved from the first display region to the second display region, and the second application interface of the second application is displayed in the first display region.

In the foregoing embodiment, through the first operation (such as a tap) on the first display object, the electronic device may switch the first application into an application that is not used temporarily, and switch the second application into an application that needs to be used currently. A simple interactive operation implements switching of the application that needs to be used currently, thereby improving human computer interaction efficiency.

In addition, after the first application interface of the first application is moved to the second display region, the first application may be switched to the background to run after a preset duration or upon completion of execution of a service corresponding to the first application. In other words, after the first application is switched into the application that is not used temporarily, a time at which the first application is switched into the background is delayed. In this way, before the first application is switched into the background for running, the user may switch the first application to the application that currently needs to be used again at any time, thereby improving the human computer interaction efficiency of the electronic device.

In some embodiments, after displaying the second application interface of the second application in the first display region, the electronic device may display first push information from the third application. The second application interface is moved to the second display region in response to a second operation performed by the user on the first push information, and a third application interface of the third application is displayed in the first display region.

The foregoing second operation may be tapping the first push information. In the foregoing embodiments, it is detected that the user taps on the first push information, indicating that the user needs to enable the third application corresponding to the first push information. In response to an intention of the user to enable the third application, the third application interface of the third application may be displayed in the first display region, and the second application interface may be moved to the second display region. In this way, a new application is also conveniently enabled on the first display screen.

In some embodiments, when the first display object is a state capsule of the second application, the first operation performed on the first display object includes: tapping the state capsule of the second application; and displaying a state card corresponding to the second application in response to the tapping of the state capsule of the second application, and then tapping the state card of the second application.

In some embodiments, after the second application interface is moved to the second display region, display positions of the second application interface and the third application interface are swapped in response to the third operation (the tapping operation) performed by the user on the second display region; or the third application interface is undisplayed in response to the third operation performed by the user on the second display region; the state card corresponding to the third application is displayed in the second display region; and the second application interface is moved to the first display region.

In the foregoing embodiment, through the third operation (the tapping operation) on the second display region, the second application that is about to enter the background to run may be switched into the application that needs to be used currently. Correspondingly, the third application does not need to be used temporarily. The third application interface or the state card is displayed in the second display region, so that the user can learn a real-time running state of the third application, thereby improving a degree of intelligence of the electronic device.

In some embodiments, a display space of the first display region is larger than a display space of the second display region, and the swapping display positions of the second application interface and the third application interface includes: increasing a display size of the second application interface in a process of moving the second application interface from the second display region to the first display region; and reducing a display size of the third application interface in a process of moving the third application interface from the first display region to the second display region.

In the foregoing example, a process of swapping the display positions of the second application interface and the third application interface is smoother visually. In addition, the first display region having a larger display area may provide more operation space for the user, to help the user operate the application that needs to be used currently, thereby improving the human computer interaction efficiency.

In some embodiments, after the second application interface is moved to the second display region, the second application interface is undisplayed after the preset duration; or the second application interface is undisplayed after a display content of the second application interface changes from a first content to a second content, where the first content and the second content are contents displayed at different nodes of a service being executed by the second application, and a node corresponding to the second content indicates an end of the execution of the service.

In the foregoing embodiments, for an application that is not used by the user temporarily, after an operation is not performed for a long time or execution of a related service ends, the application is switched to the background for running, thereby avoiding transition interference to the user due to long-term residence.

In some embodiments, if the service being executed by the second application is a state-updatable service, after the second application interface is canceled, a state capsule corresponding to the second application is displayed on the second display region, where the state capsule displays state information during the execution of the service by the second application.

In the foregoing embodiment, after the second application is switched to the background, the user can further learn a background running condition of the second application through the state capsule, thereby improving a degree of intelligence of the electronic device.

In some embodiments, after the second application interface is moved to the second display region, the second application interface is fixedly displayed in the second display region in response to a swipe-down operation performed by the user relative to the second application interface.

In the foregoing embodiment, the user may fix the second application interface in the second display region, to avoid that the second application is switched to the background because the second application has not been operated for a long time, affecting convenience of using the second application by the user.

In some embodiments, after the second application interface of the second application is displayed in the first display region, a multitasking interface is displayed in response to a user operation, where the multitasking interface includes a first task window corresponding to a fourth application, the first task window includes an application interface thumbnail corresponding to the fourth application, and the fourth application is an application running in the background; in response to a fourth operation performed by the user on the first task window, a fourth application interface of the fourth application is displayed in the first display region; and the second application interface is displayed in the second display region.

In the foregoing embodiment, viewing of the multitasking interface is further supported on the first display screen, to help the user use an application that has been switched into the background again, thereby improving the human computer interaction efficiency of the electronic device.

In some embodiments, a fifth application is run in a foreground in response to an operation performed by the user, and a fifth application interface corresponding to the fifth application is displayed in the first display region; in response to the operation performed by the user, the fifth application interface in the first display region is switched to a sixth application interface from the fifth application; and the fifth application interface is displayed in the second display region.

In the foregoing embodiment, the first display region and the second display region are used to implement split-screen use for a same application, thereby improving the human computer interaction efficiency.

In another embodiment, after the fifth application interface in the first display region is switched to a sixth application interface from the fifth application in response to the operation performed by the user, an access control corresponding to the fifth application interface may further be displayed in the second display region.

In the foregoing embodiment, a manner of displaying the access control in the second display region helps the user trace back to an application interface that is accessed.

A scenario in which the fifth application is a social application is used as an example. The fifth application interface may be a chat interface with a contact. That the fifth application interface in the first display region is switched to a sixth application interface from the fifth application in response to the operation performed by the user includes the following. In response to an operation of instructing to exit the chat interface by the user, the sixth application interface is displayed in the first display region, where the sixth application interface is a main application interface of the social application.

The scenario in which the fifth application is the social application is still used as an example. The fifth application interface is a first chat interface with a first contact, and the sixth application interface is a second chat interface with a second contact. When the first chat interface is displayed in the first display region, a contact icon corresponding to the second contact is displayed in the second display region. The contact icon is an access control configured to access the second chat interface (the sixth application interface). The second chat interface is displayed in the first display region and the second chat interface is undisplayed in response to the user tapping the contact icon in the second display region. In addition, the contact icon of the second contact in the second display region may be undisplayed. The contact icon of the first contact is newly displayed in the second display region.

An example in which the fifth application is a video application is still used. The fifth application interface is an interface on which a video is being played, and the sixth application interface is another application interface provided by the video application.

In some embodiments, in response to an operation performed by the user, a seventh application interface corresponding to a sixth application is displayed in the first display region, where the sixth application is an application that provides a video push service, and the seventh application interface is an interface for playing a first video; an eighth application interface is displayed in the second display region, where the eighth application interface includes a second video; a ninth application interface is displayed in the first display region after playback of the first video is completed or after an operation of instructing to play a next video by the user is detected, where the ninth application interface is an interface for playing the second video; and a tenth application interface is displayed in the second display region, where the tenth application interface includes a third video, and the third application interface is video data that needs to be recommended to the user after playback of the second video is completed.

In the foregoing embodiment, the user may predict a next application to be played, which helps the user use the video application.

In some embodiments, when the first display screen is configured with a camera hole for a camera to be embedded, the first display screen is divided into the first display region, the second display region, and a third display region, the third display region is a display region including the camera hole, neither the first display region nor the second display region includes the camera hole, the second display region is located on an upper side or a lower side of the third display region, and the first display region is located on a right side or a left side of the second display region and the third display region.

In the foregoing embodiment, when the camera is embedded in the first display screen, a display space can be maximally used, and operability of the first display screen can be improved.

In some embodiments, a seventh application is run in the foreground in response to the operation performed by the user, where the seventh application is an application that provides a video playback service; a fourth video is played in full screen on the first display screen in response to the operation performed by the user; in response to an operation of instructing to exit playback by the user, an eleventh application interface for playing the fourth video is displayed in the second display region, and a twelfth application interface of the seventh application is displayed in the first display region, where the twelfth application interface includes a plurality of push cards for the video data; and in response to tapping a push card of the fifth video by the user, the eleventh application interface is undisplayed in the second display region, and the fifth video is played in full screen.

In the foregoing embodiment, when playing of video data is not affected, the user is facilitated to search for another video, thereby improving the human computer interaction efficiency.

In some embodiments, that a fourth video is played in full screen on the first display screen in response to the operation performed by the user includes the following.

The fifth video is displayed in the first display region when the fifth video is video data of a portrait screen, and video information of the fifth video is displayed in the second display region.

When the fifth video is video data of a landscape screen, the fifth video is played in a fifth display region, and video information of the fifth video is displayed in a fourth display region, where the first display screen is re-divided into the third display region, the fourth display region, and the fifth display region, the fourth display region is located on the right side or the left side of the third display region, and the fifth display region is located on an upper side or a lower side of the fourth display region and the third display region.

In the foregoing embodiments, based on different scenarios (for example, playing the video of the landscape screen and playing the video of the portrait screen), different display region division solutions are triggered to be dynamically switched, so that display space of the first display screen is efficiently used, and display quality is improved.

In some embodiments, after the second application interface is moved to the second display region and the third application interface of the third application is displayed in the first display region, the second application interface is undisplayed in response to a swipe-up operation performed by the user relative to the second application interface.

In the foregoing embodiment, a manner of quickly switching the application that is not used temporarily to the background is provided for the user, thereby avoiding transition interference of the application that is not used temporarily to the user.

In some embodiments, when the first display object corresponding to the second application is displayed in the second display region, a second display object of an eighth application is further displayed in the second display region, and the eighth application is another application other than the second application.

In the foregoing embodiment, display objects from different applications may be displayed in the second display region, thereby improving a utilization rate of the second display region.

According to a second aspect, an embodiment of this application provides an electronic device. The electronic device includes a first display screen, a processor, and a memory. The first display screen is configured to display a user interface after the electronic device is folded. The memory is configured to store a computer instruction. When the processor executes the computer instruction, one or more processors is/are configured to perform the method in the foregoing first aspect and possible embodiments thereof.

According to a third aspect, an embodiment of this application provides a computer storage medium, including a computer instruction. The computer instruction, when executed by a processor, causes the electronic device to perform the method in the foregoing first aspect and possible embodiments thereof.

According to a fourth aspect, this application provides a computer program product. The computer program product, when run on the foregoing electronic device, causes the electronic device to perform the method in the foregoing first aspect and possible embodiments thereof.

It may be understood that the electronic device, the computer storage medium, and the computer program product provided in the foregoing aspects are all applicable to the foregoing corresponding method. Therefore, for beneficial effects that can be achieved by the electronic device, the computer storage medium, and the computer program product, reference may be made to beneficial effects in the foregoing corresponding method. Details are not described herein again.

### BRIEF DESCRIPTION OF DRAWINGS

FIG. 1 is an example diagram I of a foldable electronic device according to an embodiment of this application;
FIG. 2 is an example diagram II of a foldable electronic device according to an embodiment of this application;
FIG. 3 is an example diagram III of a foldable electronic device according to an embodiment of this application;
FIG. 4 is an example diagram I of an electronic device configured with an outer screen according to an embodiment of this application;
FIG. 5 is an example diagram II of an electronic device configured with an outer screen according to an embodiment of this application;
FIG. 6 is an example diagram of a division of an outer screen display region according to an embodiment of this application;
FIG. 7A is an example diagram I of a display of an outer screen according to an embodiment of this application;
FIG. 7B is an example diagram II of a display of an outer screen according to an embodiment of this application;
FIG. 7C is an example diagram III of a display of an outer screen according to an embodiment of this application;
FIG. 7D is an example diagram IV of a display of an outer screen according to an embodiment of this application;
FIG. 7E is an example diagram V of a display of an outer screen according to an embodiment of this application;
FIG. 8 an example diagram of a scenario in which an application is enabled through an outer screen according to an embodiment of this application;
FIG. 9 is an example diagram of a scenario in which an application is switched to a background from a foreground for running through an outer screen according to an embodiment of this application;
FIG. 10A, FIG. 10B, FIG. 10C, and FIG. 10D are example diagrams I of a scenario of an application running before and after switching through an outer screen according to an embodiment of this application;
FIG. 11A and FIG. 11B are example diagrams of a scenario of a display state capsule according to an embodiment of this application;
FIG. 12A, FIG. 12B, FIG. 12C, and FIG. 12D are example diagrams I of an application running before and after switching in the scenario shown in FIG. 11A and FIG. 11B according to an embodiment of this application;
FIG. 13A, FIG. 13B, FIG. 13C, FIG. 13D, and FIG. 13E are example diagrams II of a scenario of an application running before and after switching in the scenario shown in FIG. 11A and FIG. 11B according to an embodiment of this application;
FIG. 14A, FIG. 14B, FIG. 14C, FIG. 14D, and FIG. 14E are example diagrams II of a scenario of an application running before and after switching through an outer screen according to an embodiment of this application;
FIG. 15 is an example diagram I of a display scenario according to an embodiment of this application;
FIG. 16A, FIG. 16B, and FIG. 16C are example diagrams II of a display scenario according to an embodiment of this application;
FIG. 17 is an example diagram III of a display scenario according to an embodiment of this application;
FIG. 18A, FIG. 18B, FIG. 18C, and FIG. 18D are example diagrams IV of a display scenario according to an embodiment of this application;
FIG. 19A and FIG. 19B are example diagrams V of a display scenario according to an embodiment of this application;
FIG. 20A and FIG. 20B are example diagrams VI of a display scenario according to an embodiment of this application;
FIG. 21 is an example diagram VII of a display scenario according to an embodiment of this application;
FIG. 22A, FIG. 22B, FIG. 22C, FIG. 22D, and FIG. 22E are example diagrams VIII of a display scenario according to an embodiment of this application;
FIG. 23A is an example diagram I of displaying a plurality of interactive objects in a display region 601 according to an embodiment of this application;
FIG. 23B is an example diagram II of displaying a plurality of interactive objects in a display region 601 according to an embodiment of this application;
FIG. 23C is an example diagram III of displaying a plurality of interactive objects in a display region 601 according to an embodiment of this application;
FIG. 23D is an example diagram IV of displaying a plurality of interactive objects in a display region 601 according to an embodiment of this application; and
FIG. 24 is an example diagram of a hardware structure of an electronic device according to an embodiment of this application.

### DESCRIPTION OF EMBODIMENTS

In the following, terms "first" and "second" are merely used for description, and should not be construed as indicating or implying relative importance or implicitly indicating a quantity of technical features that are indicated. Therefore, features defined by "first" and "second" may explicitly or implicitly include one or more such features. In the descriptions of embodiments, unless otherwise stated, "a plurality of" means two or more.

Embodiments of this application provide a display control method. The method is applied to a foldable electronic device. The electronic device is configured with a foldable display screen, for example, referred to as a foldable screen. In the foregoing process of folding the electronic device, the foldable screen is also synchronously folded.

For example, the foregoing foldable electronic device may be a device including the foregoing foldable screen such as a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), or an augmented reality (augmented reality, AR)/virtual reality (virtual reality, VR) device. A specific form of the electronic device is not specifically limited in embodiments of this application.

In some embodiments, the foregoing foldable electronic device may be an electronic device that is folded inward along a horizontal axis.

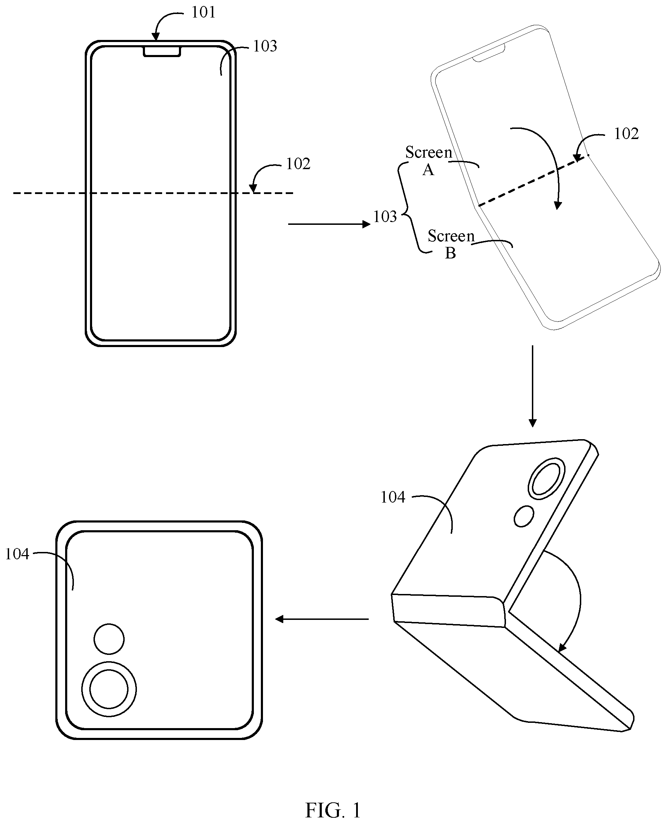

As shown in FIG. 1, an electronic device 101 includes a transverse folding axis 102. When the electronic device 101 is folded inward along a folding axis 102, a foldable screen 103 of the electronic device 101 is also folded inward along the folding axis 102. The foldable screen 103 is divided into two display regions along the folding axis 102, for example, referred to as a screen A and a screen B. It may be understood that the screen A and the screen B may be a plurality of screens that independently exist, or may be a complete screen of an integral structure, which is folded to form at least two parts. This is not specifically limited in this embodiment of this application. In addition, after the foregoing electronic device is folded inward, the screen A and the screen B are opposite to each other, and are invisible to a user.

In some other embodiments, the foregoing foldable electronic device may further include a plurality of transverse folding axes.

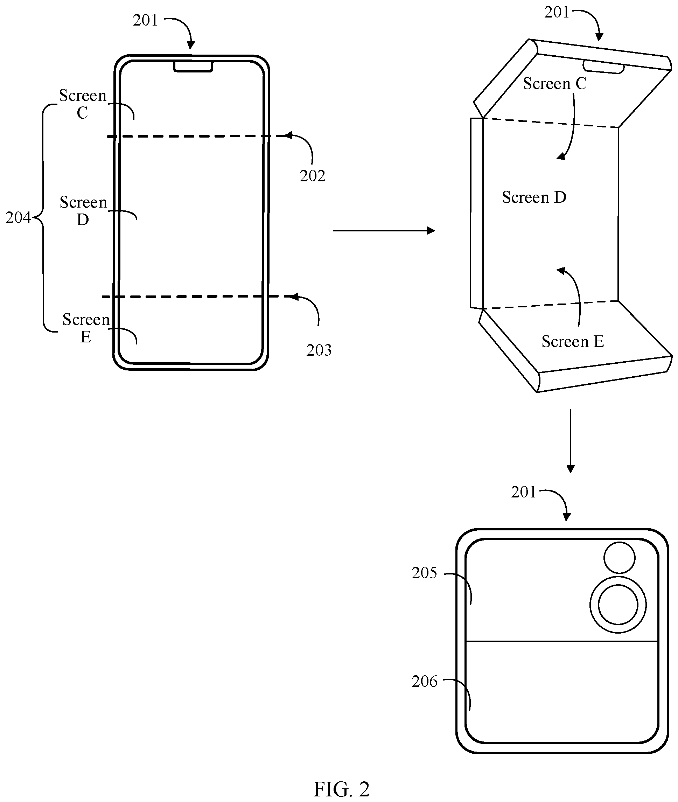

As shown in FIG. 2, an electronic device 201 includes a transverse folding axis 202 and a transverse folding axis 203. When the electronic device 201 is folded inward along a folding axis 202 and a folding axis 203, a foldable screen 204 of the electronic device 201 is also folded inward along the folding axis 202 and the folding axis 203. The foldable screen 204 is divided into three display regions along the folding axis 202 and the folding axis 203, for example, referred to as a screen C, a screen D, and a screen E. After the foregoing electronic device is folded inward, the screen C is opposite to the screen D, the screen E is also opposite to the screen D, and the foldable screen 204 is invisible to the user.

In the foregoing FIG. 1 and FIG. 2, the foldable screen of the electronic device is folded along the horizontal axis. Certainly, the foldable screen of the electronic device may also be folded along a longitudinal axis. The electronic device folded inward along the longitudinal axis has a longitudinal folding axis, and the longitudinal folding axis is perpendicular to a transverse folding axis.

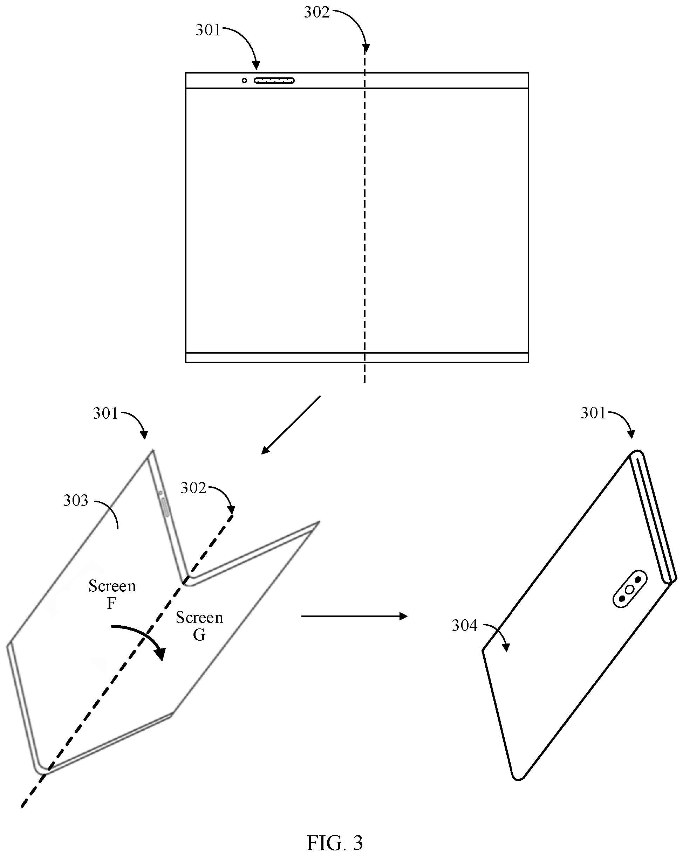

As shown in FIG. 3, an electronic device 301 includes a horizontal folding axis 302. When the electronic device 301 is folded inward along a folding axis 302, a foldable screen 303 of the electronic device 302 is also folded inward along a folding axis 302. The foldable screen 303 is divided into two display regions along the folding axis 302, for example, referred to as a screen F and a screen G. After the foregoing electronic device is folded inward, the screen F is opposite to the screen G, and the foldable screen 303 is invisible to the user.

Apparently, after the electronic device is folded inward, a foldable screen is invisible to a user, which affects operability of the electronic device. The electronic device provided in this embodiment of this application may further be provided with a display screen on a back side of the foldable screen, which may be referred to as an outer screen or a first display screen. Regardless of whether the foldable screen is folded, the outer screen is visible to the user.

For example, as shown in FIG. 1, after a foldable screen 103 is completely folded (an included angle between the screen A and the screen B is 0°), an outer screen 104 is visible to the user. The foregoing outer screen 104 may be arranged on a back side of the screen A or the screen B. It may be understood that FIG. 1 is merely an example in which the outer screen 104 is arranged on the back side of the screen A, and is not intended to limit the electronic device provided in this embodiment of this application.

After the foldable screen 103 is completely unfolded (the included angle between the screen A and the screen B is 180°), the outer screen 104 is located on the back side of the screen A or the screen B, and is visible to the user. It may be understood that when the foldable screen is in a folded state, an interface may be displayed on the outer screen 104. When the foldable screen is in an unfolded state, the interface may be displayed on the foldable screen 103.

For another example, as shown in FIG. 2, after the foldable screen 204 is completely folded (an included angle between the screen C and the screen D is 0° and an included angle between the screen E and the screen D is also 0°), an outer screen 205 and an outer screen 206 are visible to the user. The foregoing outer screen 205 may be arranged on a back side of the screen C, and the outer screen 206 is arranged on a back side of the screen E. In another possible embodiment, the outer screen may further be arranged on a back side of the screen D. In this way, the outer screen is still visible to the user. It may be understood that when the foldable screen is in the folded state, the interface may be displayed on the outer screen 205 the outer screen 206. When the foldable screen is in the unfolded state, the interface may be displayed on the foldable screen 204.

For another example, as shown in FIG. 3, after the foldable screen 303 is completely folded (an included angle between the screen F and the screen G is 0°), an outer screen 304 is visible to a user. The foregoing outer screen 304 may be arranged on a back side of the screen F or the screen G. It may be understood that FIG. 3 is merely an example in which the outer screen 304 is arranged on the back side of the screen F, and is not intended to limit the electronic device provided in this embodiment of this application.

After the foldable screen 303 is completely unfolded (an included angle between the screen F and the screen G is 180°), the outer screen 304 is located on a back side of the screen F or the screen G, and is visible to the user. It may be understood that when the foldable screen is in the folded state, an interface may be displayed on the outer screen 304. When the foldable screen is in an unfolded state, the interface may be displayed on the foldable screen 303.

In the foregoing scenario, when the outer screen of the electronic device is arranged on a surface on which a rear camera is located, the outer screen arranged is an anomalous display screen, so as to avoid the rear camera. However, an actual display area of the anomalous display screen is reduced compared with a conventional display screen, and utilization rate of some display regions is not high. In this way, human computer interaction efficiency of the outer screen is affected.

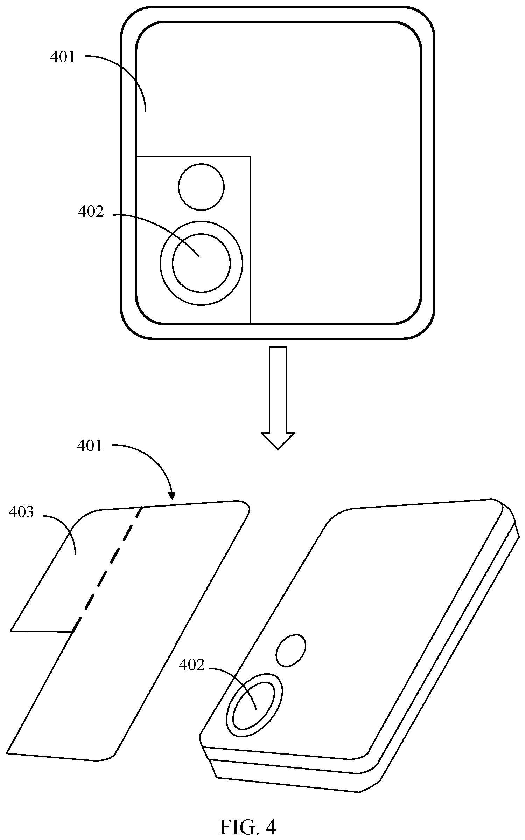

As shown in FIG. 4, an outer screen 401 of an electronic device is arranged on a surface having a rear camera 402. Due to the obstruction of the rear camera 402, the outer screen 401 is anomalous. In the related technology, a display region 403 cannot be effectively used on an anomalous outer screen 401, resulting in limited operability of the outer screen 401.

To alleviate the foregoing problems, in the electronic device provided in this embodiment of this application, when the outer screen is arranged on the surface on which the rear camera is located, on one hand, the rear camera is embedded in the outer screen through a hollow-out technology, to increase a display area of the outer screen.

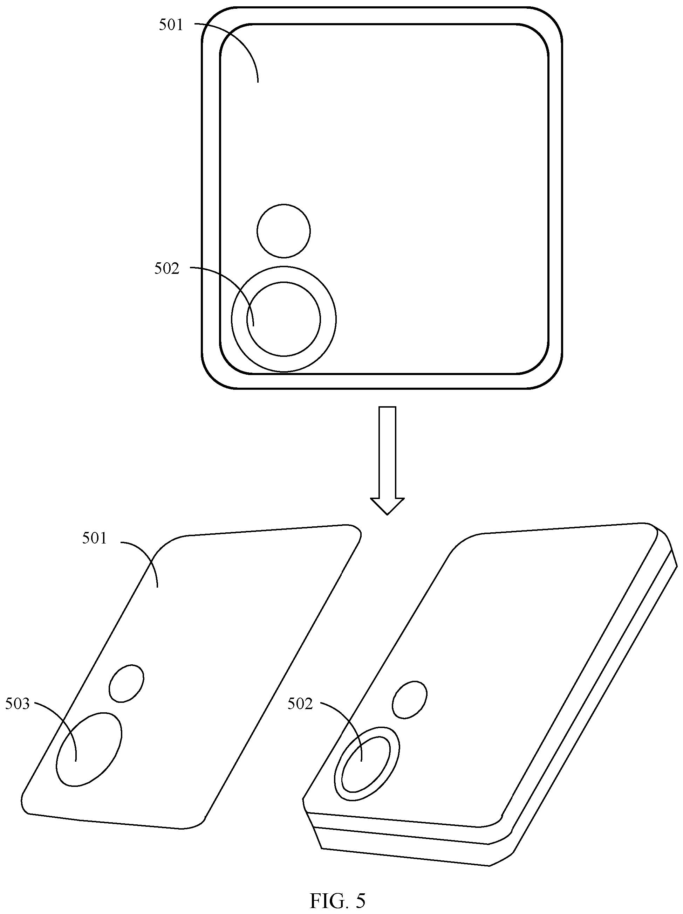

As shown in FIG. 5, an outer screen 501 of an electronic device is arranged on a surface having a rear camera 502. The outer screen 501 is configured with a camera hole 503, so that the rear camera 502 may be embedded in the outer screen. Compared with the outer screen 401, the outer screen 501 has a larger display area. For example, if a size of the outer screen is 10*10, even if a camera hole exists, a display content whose display size is 10*10 may still be displayed.

On the other hand, during operation of the electronic device, a plurality of display regions may be divided. Different interactive objects are displayed in different display regions, thereby improving a utilization rate of a display space, and improving human computer interaction efficiency of the device.

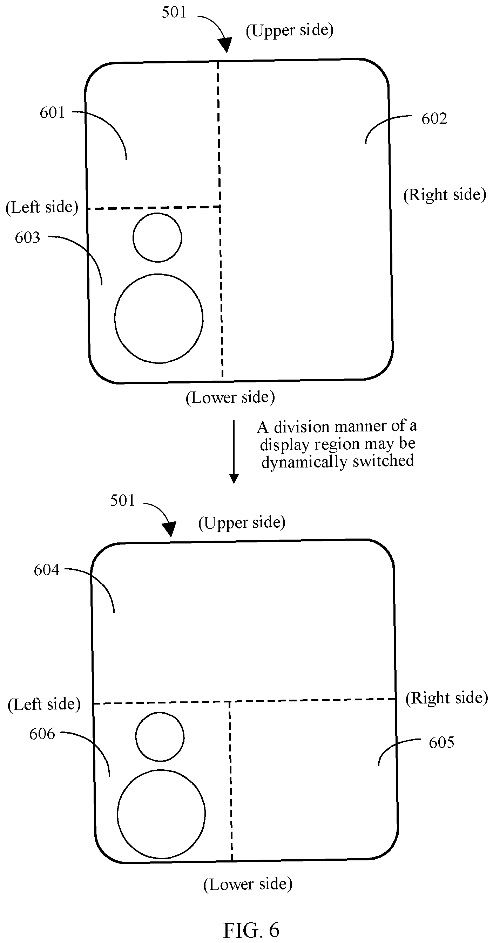

As shown in FIG. 6, the electronic device may be divided into a display region 601, a display region 602, and a display region 603. The display region 602 is a largest display region of the three display regions, for example, referred to as a first display region. The display region 603 is a display region including a camera hole. When the display regions are divided, a display area of the display region 603 (the third display region) is caused to be as small as possible, and a display area of the display region 602 is caused to be as large as possible, and has a regular shape. For example, the display region 601 (for example, referred to as a second display region) is located on an upper side of the display region 603. The display region 602 is located on a right side of the display region 601 and the display region 603. For another example, the display region 601 is located on a lower side of the display region 603. The display region 602 is located on a left side of the display region 601 and the display region 603.

In some examples, division of the display region of the outer screen may dynamically change. For example, the outer screen 501 may be further divided into a display region 604 (a fifth display region), a display region 605 (a fourth display region), and a display region 606. A display surface of the display region 604 is as large as possible, and has a regular shape. A display area of the display region 606 (the third display region) is as small as possible. For example, the display region 606 is located on a left side (or a right side) of the display region 605. The display region 604 is located on an upper side (or a lower side) of the display region 605 and the display region 606. In an implementation, the electronic device is configured with a plurality of types of display region division templates, and a plurality of display regions are divided based on different division templates. For example, the display region 601, the display region 602, and the display region 603 are divided based on a display region division template 1. The display region 604, the display region 605, and the display region 606 are divided based on the display region division template 1. The electronic device may switch to enable different display region division templates based on an actual application scenario.

After the outer screen is divided into a plurality of display regions, a display region (for example, referred to as a display region a) having a largest display area is configured to display an application interface of an application that needs to keep running at the foreground. Another display region (for example, referred to as a display region b) that does not include the camera hole is configured to display another content, such as an application interface, state information, and a recommended content, thereby efficiently using the display region on the outer screen. The display region a and the display region b may display different contents.

For example, when the outer screen is divided into the display region 601, the display region 602, and the display region 603, the display region 602 is the display region a in the foregoing embodiment, and the display region 601 is the display region b in the foregoing embodiment.

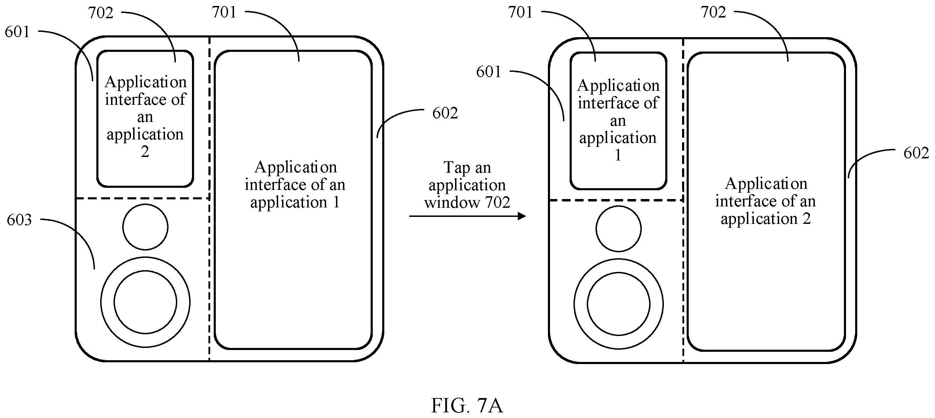

In some application scenarios, as shown in FIG. 7A, an application window 701 may be displayed in the display region 602. An application interface (a first application interface) of an application 1 (a first application) is displayed in the application window 701. An application window 702 may be displayed in the display region 601. An application interface (a second application interface) of an application 2 (a second application) is displayed in the application window 702. A size of the foregoing application window 701 is greater than a size of the application window 702.

In some embodiments, the foregoing application 1 is an application that needs to keep running at the foreground, namely, an application that a user currently needs to use. The foregoing application 2 is an application not used by the user temporarily, but an interface of the application 2 is refreshed in real time for the user to view. The user may quickly view the content of the application 2 through the display region 601. The user may quickly switch the application displayed in the display region 601 to the foreground or the background for running.

For example, the application window displayed in the display region 602 is an application window with unlimited interactivity, and can support a plurality of types of interactive operations. The supported interactive operation may trigger to start an application service provided by the application 1. The user may use, through the interactive operation in the display region 602, all application services provided by the application 1.

For another example, the application window displayed in the display region 601 is an application window with limited interactivity, and supports fewer interactive operations.

In some examples, the interactive operation supported by the application window in the display region 601 cannot be triggered to start an application service provided by the application 2. The user cannot use, through the interactive operation on the display region 601, the application service provided by the application 2.

In some other examples, the interactive operation supported by the application window in the display region 601 can trigger to start some application services of the application 2. The user may use, through the interactive operation on the display region 601, some application services provided by the application 2.

Certainly, the content of the application window displayed in the display region 601 may be dynamically updated. For example, during running of the application 2, when different application interfaces are switched based on a service rule or a content in an application interface is updated, the application window 702 in the display region 601 may correspondingly update the display content even if an operation performed by the user on the display region 601 is not detected.

In addition, the electronic device may further swap application windows displayed in the display region 601 and the display region 602 in response to a user operation. For example, in response to the user tapping the application window 702, the application window 702 is displayed in the display region 602 and the application window 701 is displayed in the display region 601. After the application windows displayed by the display region 601 and the display region 602 are swapped, a size of the application window 702 becomes larger, a size of the application window 701 becomes smaller, the application window 701 becomes an application window with limited interactivity, and the application window 702 becomes an application window with unlimited interactivity. Correspondingly, in this scenario, the application 1 changes to an application that needs to be controlled to enter the background to run. The application 2 changes to an application that may be quickly switched.

In some other embodiments, the application 1 and the application 2 are both applications that need to be kept running at the foreground. The application 1 is a primary application used by the user, the application 1 is a primary application used by the user, and the application 2 is a secondary application used by the user. Correspondingly, application windows displayed in the foregoing display region 601 and the display region 602 are both application windows with unlimited interactivity.

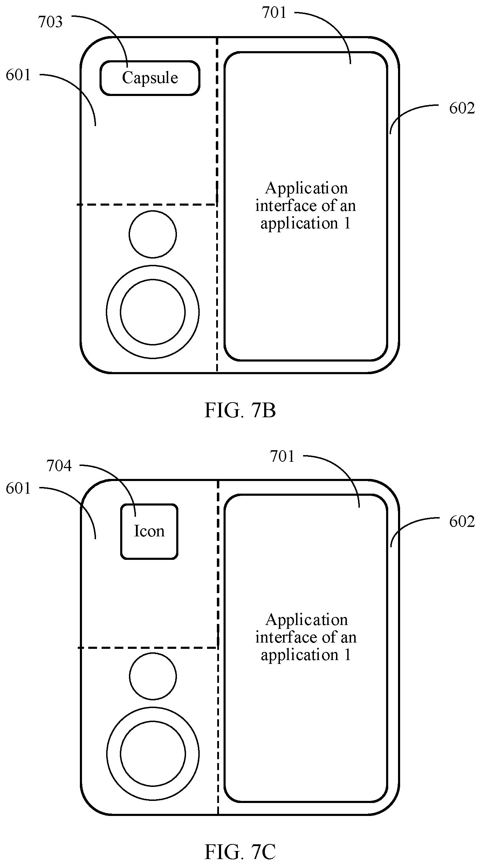

In some application scenarios, as shown in FIG. 7B, the application window 701 may be displayed in the display region 602. An application interface of an application 1 is displayed in the application window 701. The display region 601 may display a state capsule, for example, a capsule 703. The foregoing state capsule is configured to present a related content of a service running in the background, for example, a service icon and key information of a process node where the service locates. In this way, the user can learn a latest state of the service from the state capsule. One or more state capsules may be displayed in the display region 601. This is specifically determined based on an actual situation.

In some application scenarios, as shown in FIG. 7C, an application window 701 may be displayed in the display region 602. An application interface of an application 1 is displayed in the application window 701. The display region 601 may display application icons such as an icon 704. The application icons in the display region 601 may be from applications that need to be recommended to the user. One or more display application icons may be displayed in the display region 601. This is specifically determined based on an actual situation.

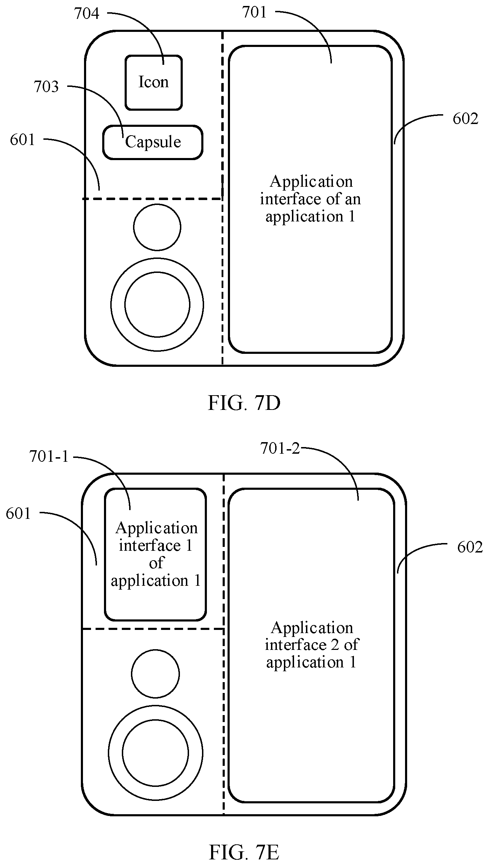

In some application scenarios, as shown in FIG. 7D, an application window 701 may be displayed in the display region 602. An application interface of an application 1 is displayed in the application window 701. The display region 601 may simultaneously display the application icon (the icon 704) and the state capsule (the capsule 703).

Based on the above, the display region 602 may display the application interface of the first application, the display region 601 may display a first display object of the second application, and the first display object may include the state capsule, the icon or the second application interface of the second application. If the service being executed by the second application is a state-updatable service, the state capsule may display state information of the service executed by the second application. In response to the first operation performed by the user on the first display object, the second application interface of the second application may be displayed in the display region 602. For example, when the first display object is a state capsule of the second application, the first operation may include tapping the state capsule of the second application. After a state card corresponding to the second application is displayed in response to tapping the state capsule of the second application, the user taps the state card of the second application.

In some application scenarios, as shown in FIG. 7E, an application window 701-1 may be displayed in the display region 601. The application window 701-1 is configured to display an application interface 1 from the application 1. The foregoing application interface 1 is an application interface from the application 1 that has been browsed, or the foregoing application interface 1 is a function list interface of the application 1. An application window 701-2 may be displayed in the display region 602. The application window 701-2 is configured to display an application interface 2 from the application 1. The foregoing application interface 2 is also from the application 1, and is an application interface that is being browsed. In some embodiments, when application interfaces displayed by the application window 701-1 and the application window 701-2 are from a same application, the application window 701-1 and the application window 701-2 are windows with unlimited interactivity. For example, in response to an operation performed by the user in the application window 701-1, an application service related to the application interface 1 may be enabled. In response to an operation performed by the user in the application window 701-2, an application service related to the application interface 2 may be enabled. For example, the application 1 is a video application. The application window 701-1 displays an interface (an application interface 1 of the video application) on which a video is being played. The application window 701-2 displays a main interface (an application interface 2 of the video application) of the video application. The main interface includes cover images of a plurality of pieces of video data. In this scenario, in response to the operation performed by the user in the application window 701-1, a video that is being played may be paused. In response to the operation performed by the user in the application window 701-2, cover images of a plurality of pieces of video data may be displayed in a scrolling manner.

In this way, during use of a same application, the user can quickly trace back to an application interface that is accessed, thereby improving human computer interaction efficiency.

In another possible scenario, a card or a state capsule (or a function access portal of another type) from the application 1 may also be displayed in the display region 601. An application interface of the application 1 is displayed in the display region 602. Implementation details of performing, by the electronic device, the foregoing display control method according to embodiments of this application are described below with reference to an actual application scenario and the accompanying drawings.

In some embodiments, after the electronic device is folded inward, the electronic device may light up the outer screen and display the main interface on the outer screen in response to the operation performed by the user. The foregoing main interface may be an application interface provided by a desktop application. A plurality of application icons are displayed on the main interface. The plurality of applications may be applications already installed in the electronic device.

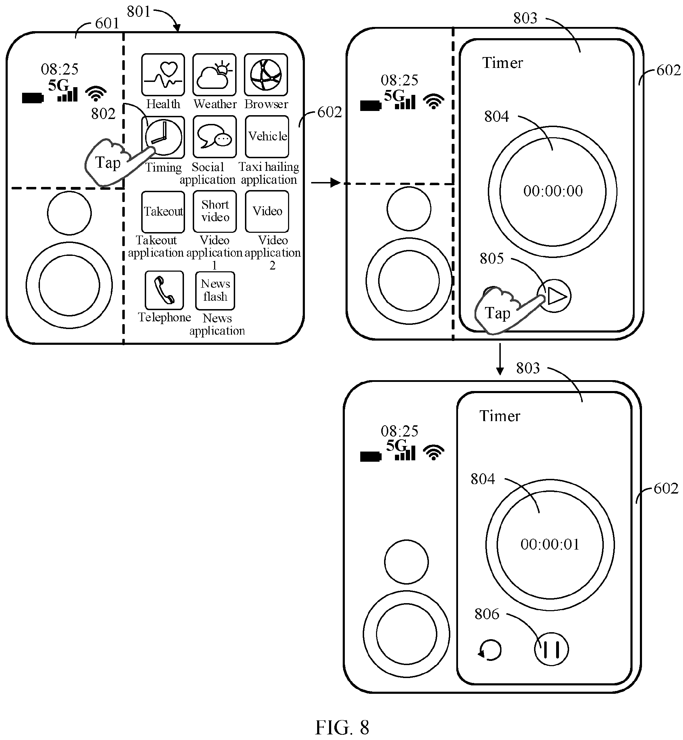

As shown in FIG. 8, the folded electronic device may display a main interface 801 in response to an operation performed by a user. The foregoing main interface 801 includes application icons of a plurality of applications, for example, an application icon 802 corresponding to a timing application. In addition, the main interface 801 further includes a system time and state icons (icons indicating a power state and a network quality state). The foregoing application icons may be displayed in the display region 602. The foregoing system time and the state icons are displayed in the display region 601.

In some embodiments, during display of the main interface 801, the user may instruct, through an operation on an outer screen, the electronic device to run a specified application. In a possible implementation, the main interface 801 may swipe left and right to view the icon of another application.

As shown in FIG. 8, in response to an operation of tapping the application icon 802 by the user, the electronic device may display an application window 803 corresponding to the timing application on the display region 602 of the outer screen. The foregoing application window 803 is configured to display an application interface of a timing application. It may be understood that dashed lines shown in FIG. 6 to FIG. 23D are merely examples of different display regions of the outer screen. In an actual application process, the foregoing dashed lines are invisible to the user.

As shown in FIG. 8, a timing time 804 and a control 805 that indicates to start timing are displayed in an application window 803. In response to the user tapping the control 805, the timing time 804 starts to be updated. In addition, the control 805 is undisplayed, and a control 806 instructing to end timing is displayed. In this way, the user may instruct, through the operation in the display region 602, to enable a timing service provided by the timing application.

In some embodiments, the electronic device controls, in response to the operation of instructing to exit the timing application, the timing application to be switched into the background to run.

In this embodiment of this application, that the application is controlled to enter the background may include two stages, for example, a first stage and a second stage. The first stage is a preparation stage before the application enters the background rung. In this stage, the application runs on the background in a visual form, and the user may learn a real-time running state of the application. In addition, at the first stage, the application may further provide an access entry of some services for the user, or may be quickly switched to the foreground to run through a simple operation such as tapping.

The second stage is a stage in which the application runs on the background. At this stage, the application runs on the background in an invisible form. Through the first stage and the second stage, a time when the application is switched into the background for running may be delayed, and the user still uses the application and learns a running state of the application while reducing impact on the user.

In the first stage, the electronic device moves the display position of the application window of the application and reduces the size of the application window, so that the electronic device has enough display space to the foreground to run another application. For example, in response to an operation of instructing to exit the timing application, the timing application is controlled to enter a background process to enter the first stage.

In the second stage, the application interface corresponding to the application is undisplayed. The application process corresponding to the application normally runs in the background. A time of entering the second stage may be determined based on a specific scenario. For example, for some applications (for example, a takeout application in subsequent embodiments), before a specific indication 1 of a user is not received (for example, an indication of undisplaying an application window of the application) or a specific service (for example, a takeout service) is not completely executed, the second stage is not entered. For another example, after entering the first stage for a preset duration, entering the second stage may be triggered. For another example, when the application is in the first stage, another application also starts a process of entering background for running, and the application may be triggered to enter the second stage. For another example, if a specific indication 2 (an operation instructing to fixedly display the application window of the application, or an operation instructing to interrupt entering an operation running in the background) of the user is received within the preset duration of entering the first stage, the second stage is not entered.

In a subsequent embodiment, after the application enters the first stage and before the application enters the second stage, it may be referred to that the application is run in the background in a visible form. In addition, after the application enters the first stage and before a time point at which the application is interrupted to enter the background for running, it may also be referred to that the application is run in the background in the visible form.

It may be understood that, in some examples, after the application is switched keeping the foreground running to running the application in the visible form at the background, the interactivity decreases. In some other examples, after the application is switched from keeping the foreground running to running the application in the visible form at the background, the interactivity remains unchanged, and an operational space is reduced.

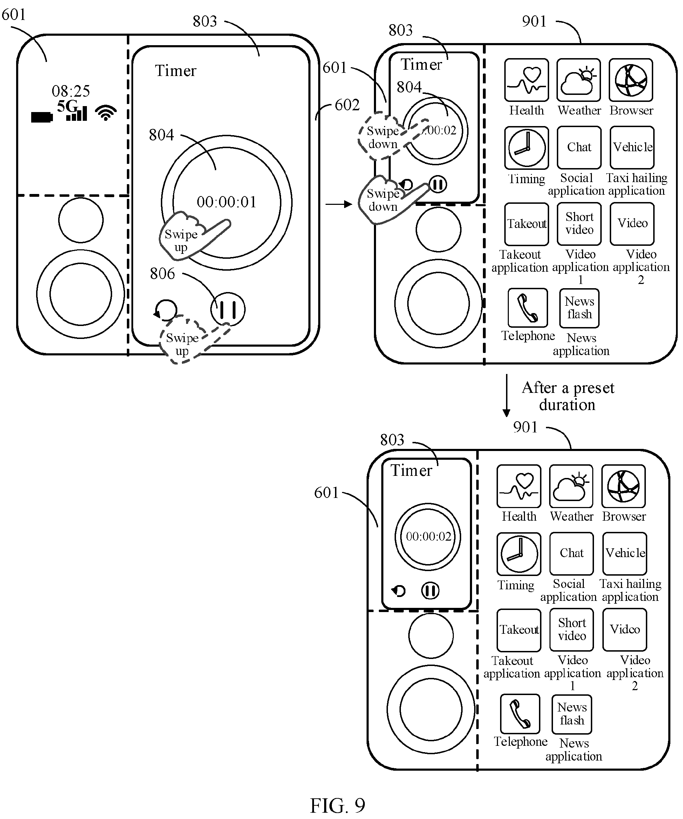

As shown in FIG. 9, in a scenario in which an application window 803 of a timing application is displayed in the display region 602, in response to an operation of instructing to exit the timing application by a user, for example, the user performs a swipe-up operation on the display region 602, a main interface 901 is displayed. Compared with the main interface 801, the main interface 901 newly displays the application window 803. The foregoing application window 803 is displayed in the display region 601 of the outer screen.

As shown in FIG. 9, in response to an operation instructing to exit a timing application, the timing application is controlled to be switched to the background to run. For example, a process in which the timing application is switched to the background first enters a first stage. Correspondingly, a size of the application window 803 is reduced, and the application window is moved from the display region 602 to the display region 601.

After the application window 803 is displayed in the display region 601, the timing time 804 of the application window 803 is still updated based on a service process of the timing service because the timing service is not stopped. For example, the timing time changes from 00:00:01 to 00:00:02. Then, as time passes by, the timing time 804 is still updated.

In some embodiments, when an operation performed by a user on the application window 803 is not received after the application window 803 is displayed in the display region 601, in response to a display duration of the application window 803 reaching a preset duration (for example, 5 seconds), namely, after the preset duration of the first stage is entered, the process of switching the timing application to the background enters the second stage. Correspondingly, the application window 803 may be undisplayed. The timing application runs at the background in an invisible form. A timing service is displayed on a display screen in a form of a capsule. The time is displayed in the capsule in real time.

In some embodiments, before the display duration of the application window 803 in the display region 601 reaches the preset duration, if an operation of instructing to fix the application window 803 by the user is detected, such as a swipe-down operation relative to the application window 803, the display duration of the application window 803 is no longer limited by the preset duration. In other words, the process of switching the timing application to the background does not enter the second stage any more. Correspondingly, after the display duration of the application window 803 on the display region 601 exceeds the preset duration, the foregoing application window 803 may still be displayed.

Certainly, for a specific type of application window, the display duration of the application window in the display region 601 is also not limited to the preset duration. Details are described in subsequent embodiments.

It may be understood that after the application window 803 is displayed in the display region 601, the timing application runs in the background of the electronic device in a visible form. In this scenario, the electronic device may further enable another application in response to the operation performed by the user on the outer screen.

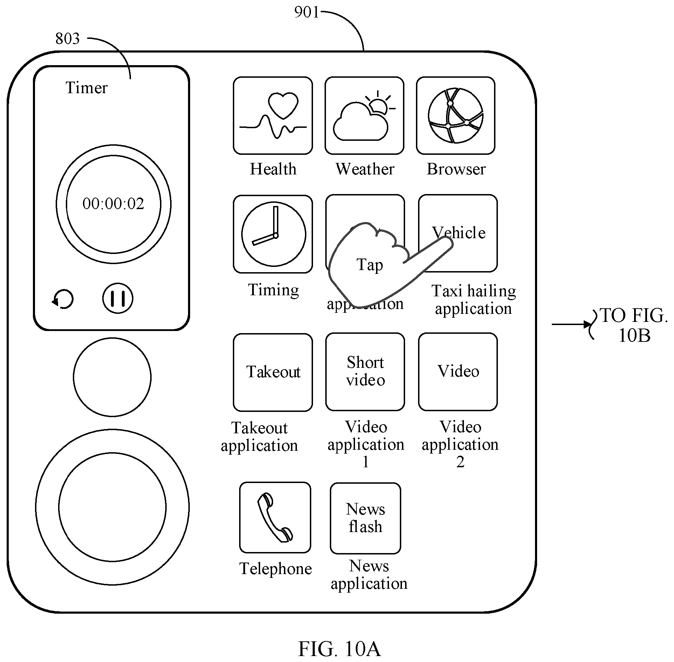

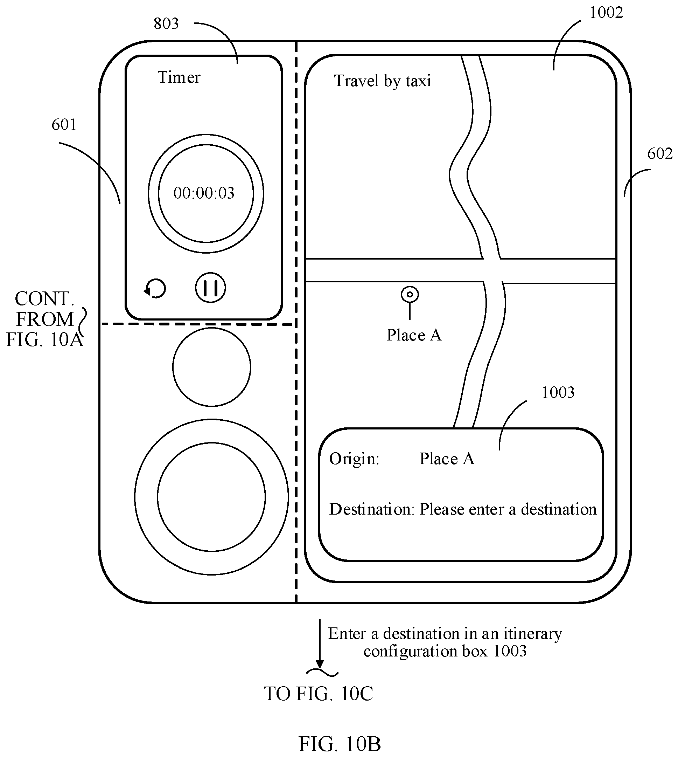

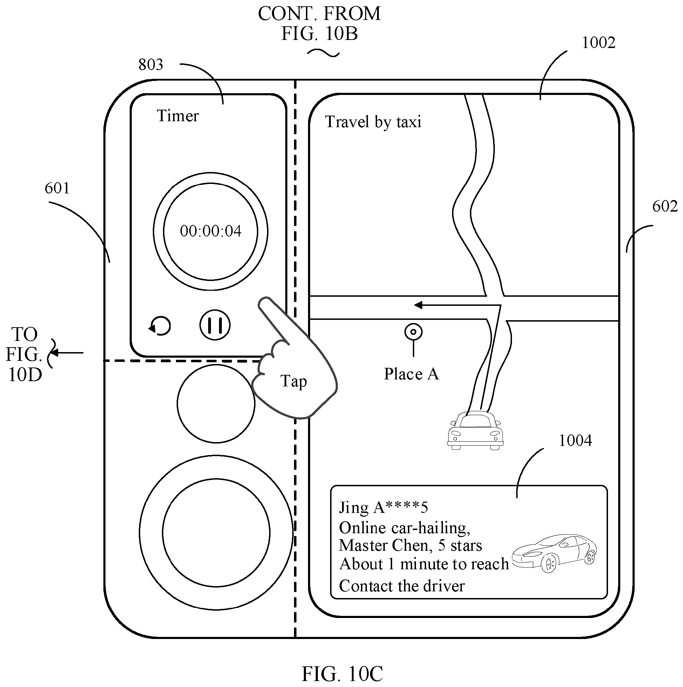

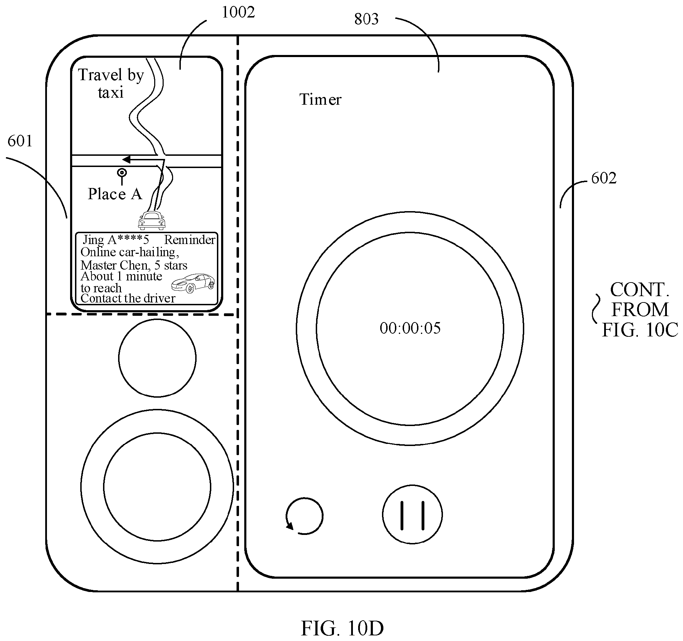

For example, as shown in FIG. 10A, FIG. 10B, FIG. 10C, and FIG. 10D, the main interface 901 further includes an application icon 1001 of a taxi hailing application. During display of the main interface 901, in response to an operation of tapping an icon 1001 by a user, the taxi hailing application is started. As shown in FIG. 10A, FIG. 10B, FIG. 10C, and FIG. 10D, the electronic device may display an application window 1002 in the display region 602 of the outer screen. The foregoing application window 1002 may display an application interface provided by the taxi hailing application, for example, a taxi hailing travelling interface. In response to an operation performed by the user on the application window 1002, for example, an operation of inputting a destination in an itinerary configuration box 1003, a taxi hailing service provided by the taxi hailing application is started. A suitable travelling vehicle may be matched for the user through the taxi hailing service, and the user is guided to take the travelling vehicle until the destination configured by the user is reached.

It may be understood that a service process of the foregoing taxi hailing service includes a plurality of process nodes, for example, a process node for starting to match a vehicle, a process node for matching the travelling vehicle, a process node of reaching an origin of the travelling vehicle, a process node of picking up a user, and a process node of reaching the destination of the travelling vehicle. In response to the service process reaching different process nodes, the application window 1002 may display different application interfaces of the taxi hailing application.

For example, after the travelling vehicle is matched, a travelling card 1004 may be displayed in the application window 1002. The travelling card 1004 includes related information of the travelling vehicle, such as a license plate number, a driver name, and a travelling rating. In addition, a navigation route from the travelling vehicle to the "origin" may further be displayed in the application window 1002.

In some embodiments, the electronic device may swap display positions of the application window 803 and the application window 1002 in response to the operation performed by the user. As shown in FIG. 10A, FIG. 10B, FIG. 10C, and FIG. 10D, in response to the tapping operation performed by the user in the display region 601, the application window 1002 is zoomed out, and the application window 1002 is moved to the display region 601 from the display region 602. In addition, in response to the tapping operation performed by the user in the display region 601, the application window 803 may further be zoomed in, and the application window 803 is moved to the display region 602 from the display region 601. After the display positions of the application window 803 and the application window 1002 are swapped, the taxi hailing application is run at the background of the electronic device in a visible form. The foregoing timing application is switched back to a state in which the timing application keeps running at the foreground. In other words, a process in which the timing application is switched into the background is interrupted.

After the application window 1002 is displayed in the display region 601, a display duration reaches a preset duration, and the foregoing application window 1002 may be undisplayed. It may be understood that, during running of the taxi hailing application at the background, the taxi hailing service is not interrupted. In different process nodes, key information of the taxi hailing service varies. To prevent the user from omitting the key information of the taxi hailing service in each process node, a state capsule corresponding to the taxi hailing service may be displayed in the display region 601 after the application window 1002 is stopped from being displayed.

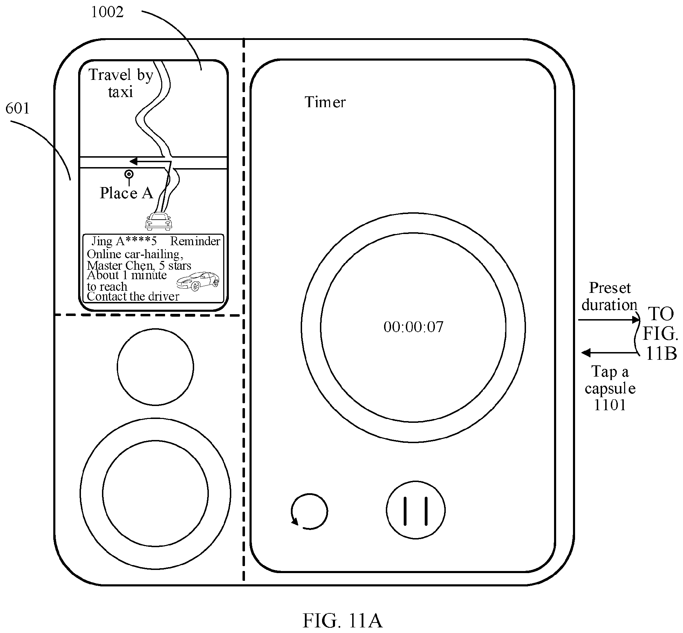

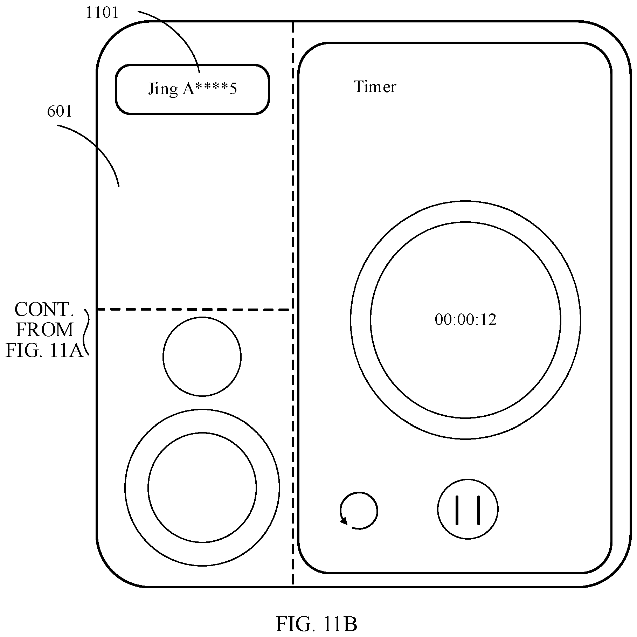

As shown in FIG. 11A and FIG. 11B, in response to the display duration of the application window 1002 in the display region 601 exceeding the preset duration, the application window 1002 is undisplayed, and a capsule 1101 is displayed. The capsule 1101 may display real-time key information of a taxi hailing service, for example, license plate number information, an estimated remaining duration for a vehicle to arrive at an origin, and a color of the vehicle. Alternatively, a plurality of pieces of the foregoing information may be displayed on the capsule in a rolling manner. For example, the license plate number information, the estimated remaining duration for the vehicle to arrive at the origin, and the color of the vehicle are sequentially displayed at an interval of 1s.

In some embodiments, after the capsule 1101 is displayed, the taxi hailing application runs in the background. A user may learn a running state of the taxi hailing application through the key information displayed by the capsule 1101. During display of the capsule 1101, the electronic device may expand the capsule 1101 in response to an operation performed by the user on the capsule 1101.

For example, as shown in FIG. 11A and FIG. 11B, the application window 1002 is displayed in the display region 601 in response to an operation of tapping the capsule 1101 (a state capsule) by the user.

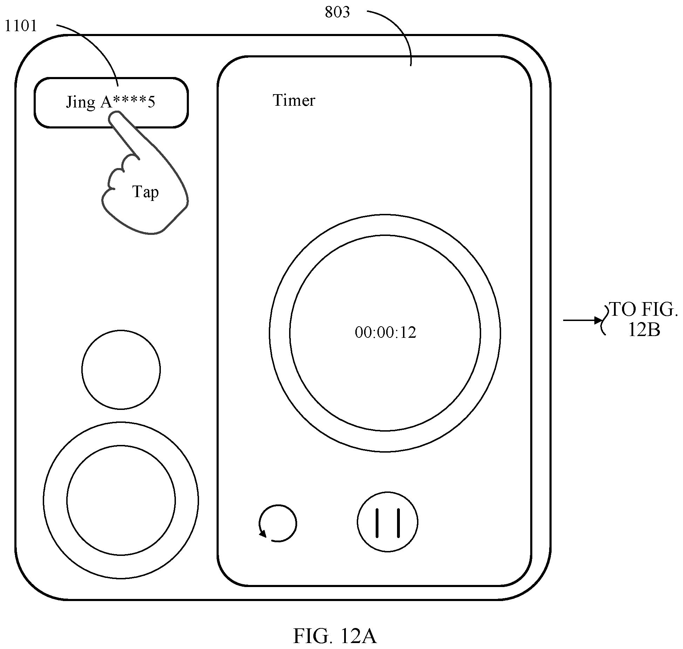

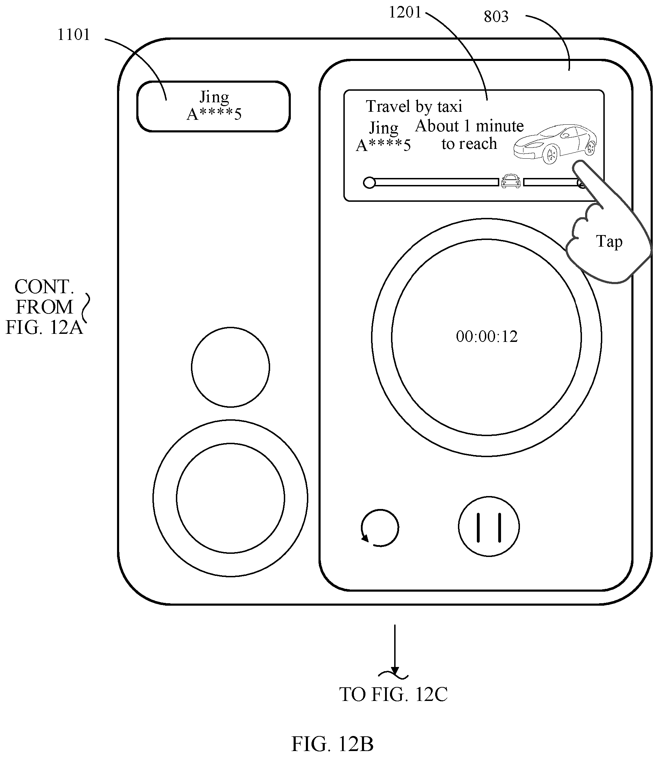

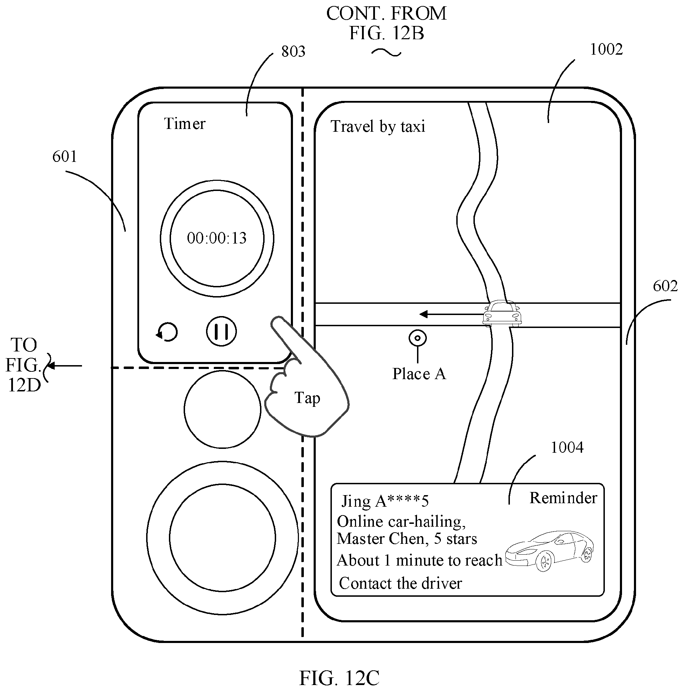

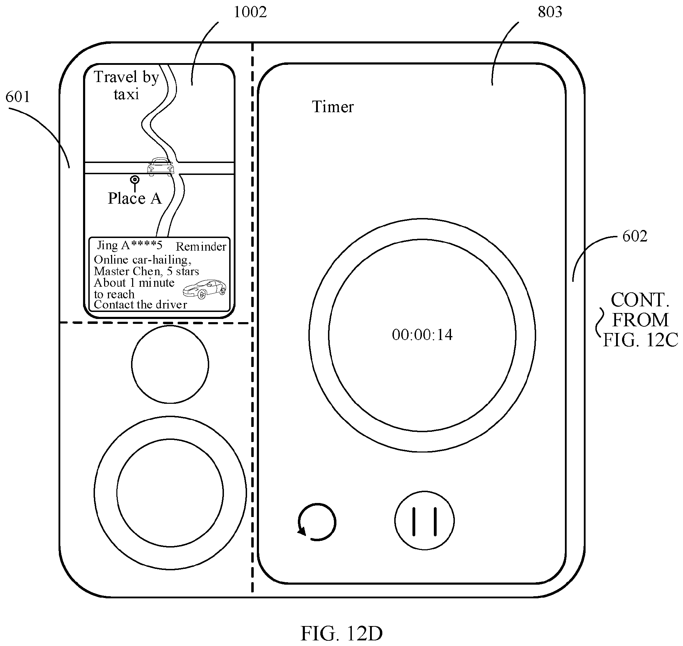

For another example, as shown in FIG. 12A, FIG. 12B, FIG. 12C, and FIG. 12D, in response to the operation of tapping the capsule 1101 (the state capsule) by the user, the electronic device may display a notification card 1201 corresponding to a taxi hailing application on an outer screen. Compared with the capsule 1101, the foregoing notification card 1201 may display more key information of a taxi hailing service, for example, an estimated time when a travelling vehicle reaches an origin.

In some embodiments, after the notification card 1201 is displayed, the notification card 1201 may be undisplayed if the user does not perform an operation on the notification card 1201.

In some embodiments, after the notification card 1201 is displayed, a taxi hailing application may be switched to the foreground to run if an operation performed by a user on the notification card 1201 is detected.

As shown in FIG. 12A, FIG. 12B, FIG. 12C, and FIG. 12D, in response to the user tapping the notification card 1201, the application window 1002 corresponding to a taxi hailing application is displayed in the display region 602. In addition, an application window 803 originally displayed in the display region 602 is zoomed out and moved to the display region 601. In other words, in response to the user tapping the notification card 1201, the timing application that originally needs to be kept running at the foreground is switched into the background to run in a visible form.

During a period when the foregoing application window 803 is displayed in the display region 601, the application window 803 may display a real-time application interface of the timing application. In addition, as shown in FIG. 12A, FIG. 12B, FIG. 12C, and FIG. 12D, in response to the user tapping the display region 601, or tapping the application window 803 in the display region 601, the timing application may be switched back to a state of keeping running at the foreground again. Correspondingly, the taxi hailing application is switched to the background to run. Correspondingly, the electronic device may swap the display positions of the application window 803 and the application window 1002.

For example, the application window 803 is moved to the display region 602 from the display region 601, and the application window 1002 is moved from the display region 602 to the display region 601. In a process of swapping the display positions of the application window 803 and the application window 1002, the size of the application window 803 is gradually zoomed in until the display region 602 is adapted, and the size of the application window 1002 is gradually zoomed out until the display region 601 is adapted.

The foregoing is merely an example of a window switching special effect. The foregoing special effect may prompt that the positions of two application windows may further be swapped again. In other words, running states of the foreground and the background of corresponding two applications may further be swapped. In another embodiment, another switching special effect may further be used. This is not specifically limited in this embodiment of this application.

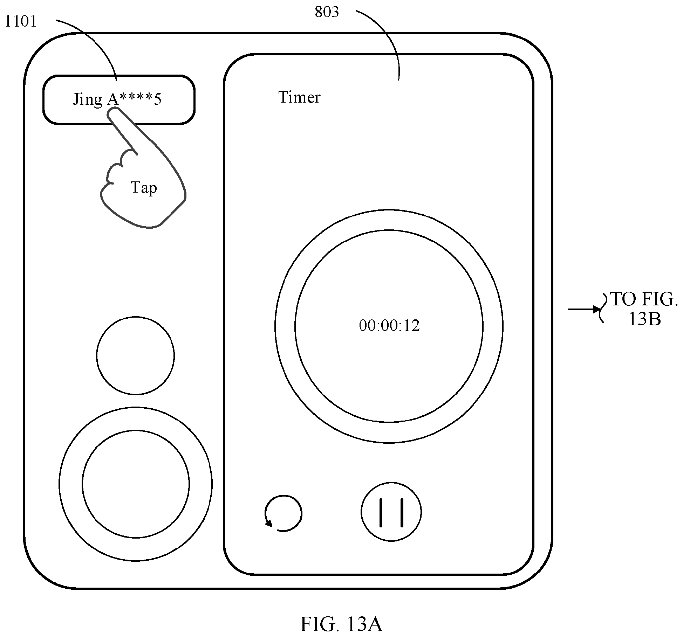

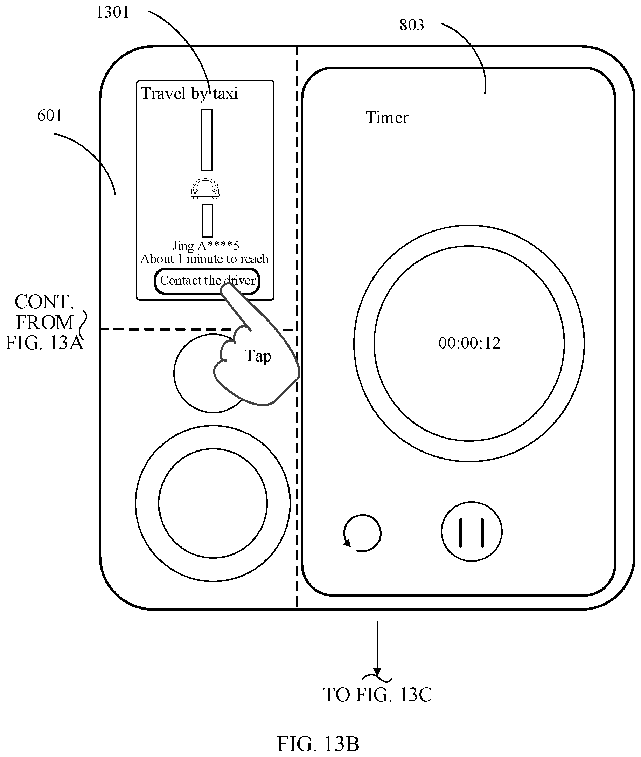

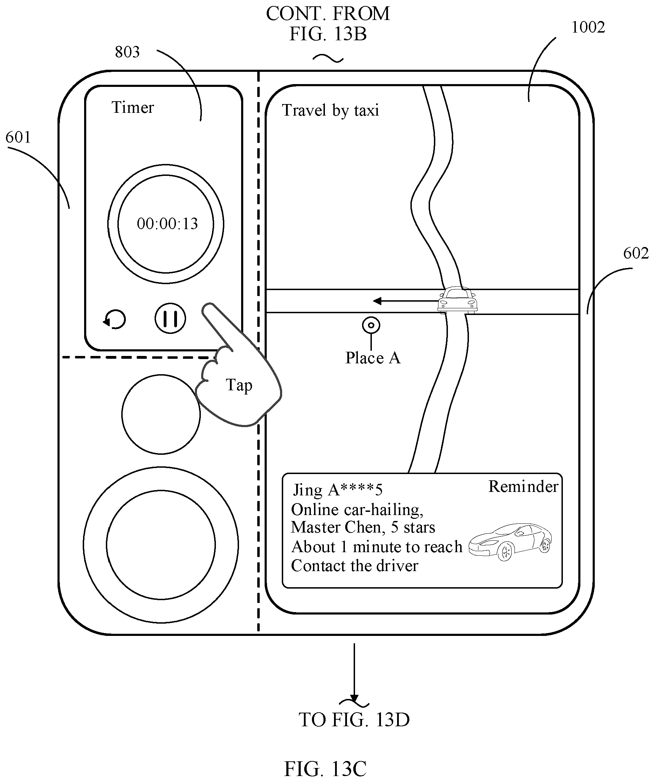

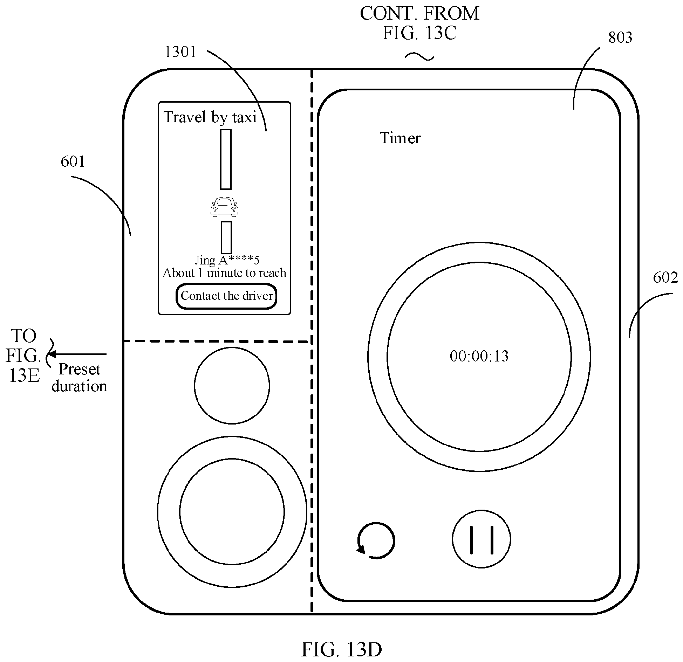

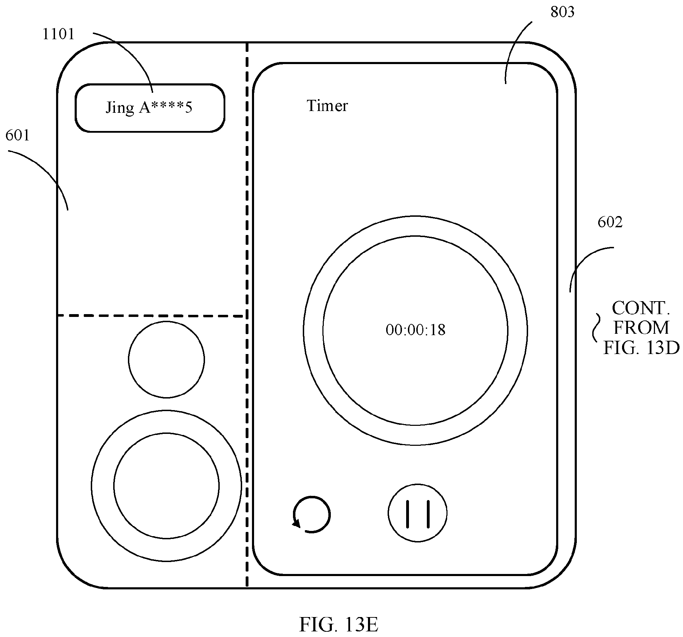

In some other embodiments, as shown in FIG. 13A, FIG. 13B, FIG. 13C, FIG. 13D, and FIG. 13E, a state card 1301 is displayed in response to an operation of tapping a capsule 1101 by a user. The state card 1301 is displayed in the display region 601 of the outer screen. The foregoing state card 1301 is in an expanded state of the capsule 1101, and may display more key contents of the taxi hailing service. It may be understood that the foregoing notification card 1201 and the state card 1301 are state cards in two different display forms corresponding to the taxi hailing application. The figure is merely an example and does not specifically limit this application.

In response to the user tapping the state card 1301, the application window 1002 corresponding to the taxi hailing application is displayed in the display region 602. In addition, the application window 803 originally displayed in the display region 602 is zoomed out and moved to the display region 601. In other words, in response to the user tapping the state card 1301, the timing application that originally kept running at the foreground is switched into the background to run in a visible form.

During a period when the foregoing application window 803 is displayed in the display region 601, the application window 803 may display a real-time application interface of the timing application. For another example, as shown in FIG. 13A, FIG. 13B, FIG. 13C, FIG. 13D, and FIG. 13E, in response to the user tapping the display region 601, or tapping the application window in the display region 601, the application window 1002 of the taxi hailing application is undisplayed, and the taxi hailing application enters the background to run. Correspondingly, the state card 1301 of the taxi hailing application may be restored to be displayed in the display region 601, to help the user learn a real-time running state of the taxi hailing application.

In addition, in response to the user tapping the display region 601, or tapping the application window in the display region 601, the application window 803 may further be moved to the display region 602 from the display region 601. During moving the application window 803, the size of the application window 803 is gradually zoomed in until the display region 602 is adapted. After the application window 803 is displayed in the display region 602, the timing application is a primary application providing a service for the user.

In another possible embodiment, during the display of the application window 803 in the display region 601, in response to the user tapping the display region 601, or tapping the application window in the display region 601, the application window 1002 corresponding to the taxi hailing application may be moved to the display region 601, and the application window 803 corresponding to the timing application may be moved to the display region 602. In this scenario, the timing application is the primary application providing the service for the user, and the taxi hailing application is a secondary application providing the service for the user.

In addition, when the duration for which the state card 1301 is displayed on the display region 601 exceeds the preset duration, the state card 1301 may be undisplayed, and then the capsule 1101 is displayed on the display region 601. The capsule 1101 may be in a retracted form of the state card 1301.

In some embodiments, the electronic device may further display various notifications that need to be pushed on the outer screen, for example, a push notification used for pushing an application message.

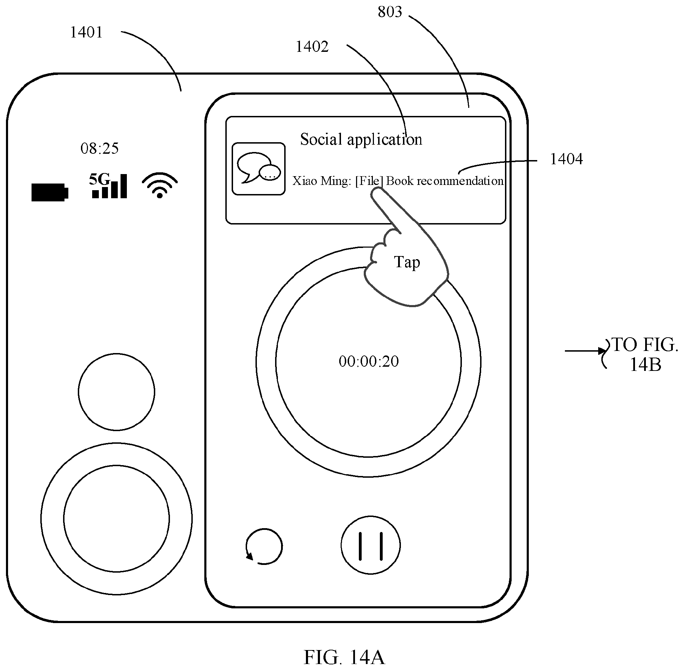

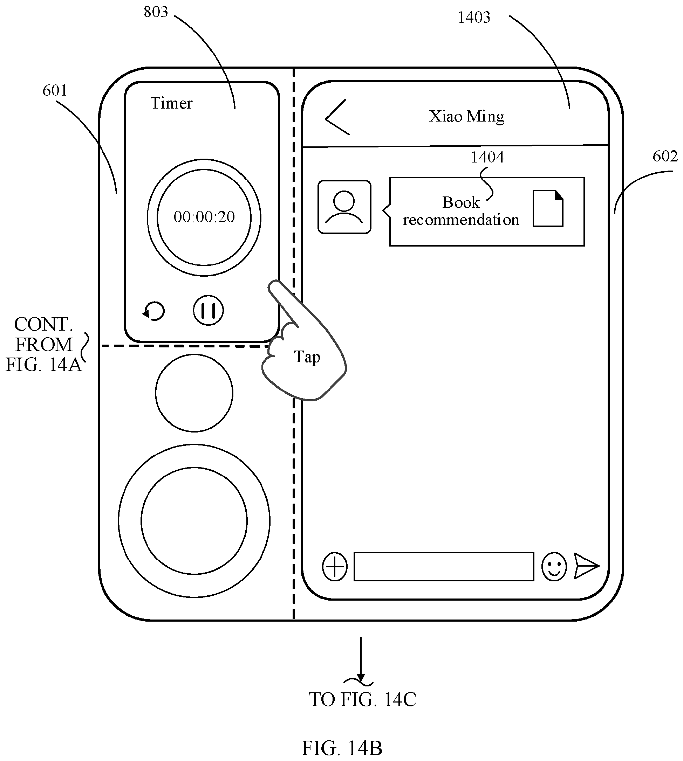

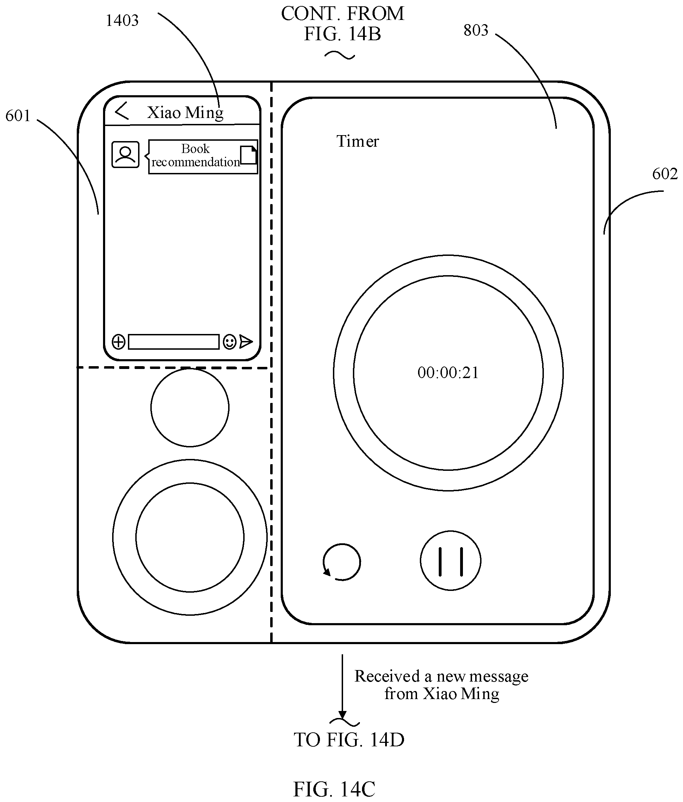

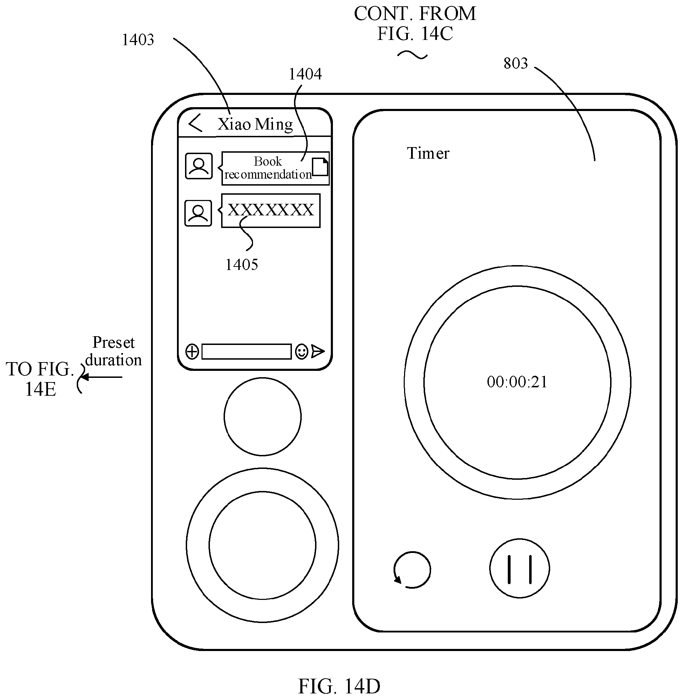

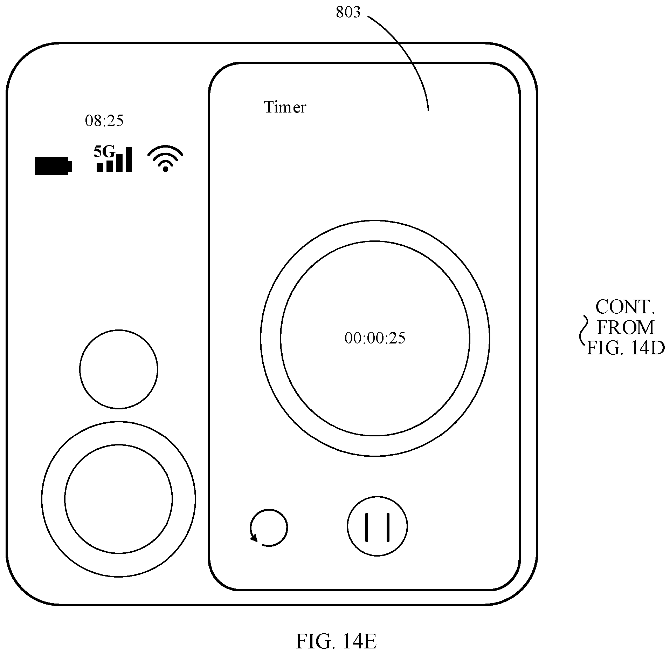

As shown in FIG. 14A, FIG. 14B, FIG. 14C, FIG. 14D, and FIG. 14E, when a timing application runs at a foreground of the electronic device, an interface 1401 is displayed in the outer screen of the electronic device. The interface 1401 includes the application window 803 of the timing application. During display of the interface 1401, a notification card 1402 (first push information) may be displayed in response to an application message 1404 from a social application (a third application). The foregoing application message 1404 may be a message sent by a contact on a social application. The push card 1405 includes the content of the application message 1404.

It may be understood that different application messages carry different contents, and the contents presented by the push card are also different. This is not specifically limited in this embodiment of this application.

During display of the notification card 1402, in response to a second operation (for example, a tapping operation) performed by the user on the notification card 1402, the electronic device may control the timing application to be switched to a background for running, and the social application to be run at the foreground.

As shown in FIG. 14A, FIG. 14B, FIG. 14C, FIG. 14D, and FIG. 14E, the electronic device may display an application window 1403 of the social application in the display region 602 of the outer screen. For example, the application window 1403 may display a chat interface including an application message 1404.

Correspondingly, the application window 803 is moved from the display region 602 to the display region 601. In a process of moving, the size of the application window 803 is gradually zoomed out until the display region 601 is adapted.

Before the electronic device displays of the application window 803, in response to the user tapping the display region 601, or tapping the application window 803 in the display region 601, the timing application corresponding to the application window 803 is switched to a state of keeping running at the foreground, and the social application corresponding to the application window 1402 is switched to the background in a visible form.

As shown in FIG. 14A, FIG. 14B, FIG. 14C, FIG. 14D, and FIG. 14E, the application window 803 is moved from the display region 601 to the display region 602, and the application window 1402 is moved from the display region 602 to the display region 601. In a process of swapping the display positions of the application window 803 and the application window 1402, the size of the application window 803 is gradually zoomed in until the display region 602 is adapted, and the size of the application window 1402 is gradually zoomed out until the display region 601 is adapted.

During running of a social application at the background in the visible form, for example, during display of the application window 1402 in the display region 601, display content of the application window 1402 may be updated. For example, a new message such as an application message 1405 from a same contact is received, and the application message 1405 may be displayed on the application window 1402.

In addition, when the display duration of the application window 1402 in the display region 601 reaches the preset duration, the application window 1402 may be undisplayed. In this way, the social application runs at the background in the invisible form.

In an example scenario, when the second application interface of the second application is displayed in the display region 602 and the first application interface of the first application is displayed in the display region 601 (or the first application is already running at the background, and a system time and a state icon may be displayed in the display region 601), a notification card 1402 (first push information) may be displayed in response to an application message 1404 from the social application (the third application). In response to the second operation (such as the tapping operation) performed by the user on the notification card 1402, the first application interface of the first application is undisplayed. The second application interface is moved to the second display region, and the third application interface of the third application is displayed in the first display region.

In an example scenario, after the third application interface is displayed in the display region 602 and the second application interface is displayed in the display region 601, in response to the third operation (for example, the tapping operation) performed by the user on the second application interface, display positions of the second application interface and the third application interface are swapped. Alternatively, the third application interface is undisplayed, and a state card corresponding to the third application is displayed in the second display region. Specifically, reference is made to FIG. 13A, FIG. 13B, FIG. 13C, FIG. 13D, and FIG. 13E. In FIG. 13A, FIG. 13B, FIG. 13C, FIG. 13D, and FIG. 13E, an application window 1002 is configured to display a third application interface of the third application. An application window 803 is configured to display a second application interface of the second application. A state card 1301 is a state card corresponding to the third application.

In some embodiments, in a process of executing a corresponding service by some applications, the user needs to view a service process at any time. An application window of this type of application may be configured as an application window of a specific type. As shown in the foregoing embodiment, the application window of the specific type is not limited by the display duration in the display region 601. For example, in a process of executing a takeout service of a takeout application, the user needs to view a dining-up condition and a dining-sending condition of a takeout at any time. When executing the takeout service, an application window of the takeout application may be configured as an application window of a specific type.

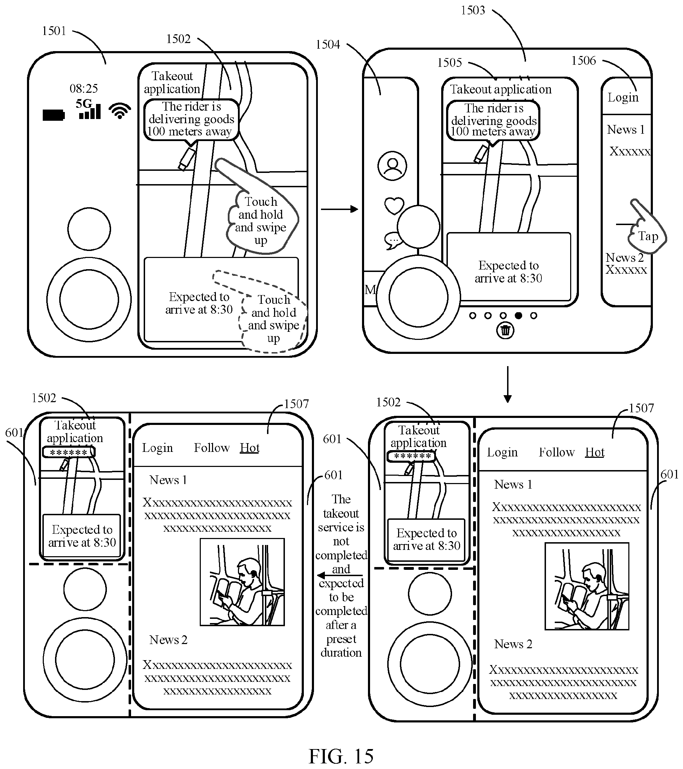

In an example scenario, during running of the takeout application at the foreground, the takeout service may be executed in response to a user operation. In this scenario, as shown in FIG. 15, the electronic device may display an interface 1501. The foregoing interface 1501 includes an application window 1502 of the takeout application. An application interface displayed in the application window 1502 is related to a service progress of the takeout service. For example, a dining-up waiting interface is displayed at a dining-up process node, a dining-sending interface (an interface shown in the application window 1502 in FIG. 15, for example, referred to as first content) is displayed at a dining-sending process node, and a settlement interface (a second content) is displayed at a dining-sending end node.

In response to an operation of instructing to view the multitasking interface by the user, for example, an operation of touching, holding, and swiping up the application window 1502, the electronic device may switch the takeout application to the background to run, and display a plurality of multitasking windows on the outer screen. Each multitasking window corresponds to an application run at the background. For example, applications running at the background include a takeout application, a short video application, and a news application (a fourth application). As shown in FIG. 15, a multitasking interface 1503 includes a multitasking window 1504, a multitasking window 1505, and a multitasking window 1506. The multitasking window 1504 may be configured to display an application interface thumbnail of the short video application. The multitasking window 1505 is configured to display an application interface thumbnail of the takeout application. The multitasking window 1506 (a first task window) is configured to display an application interface thumbnail of the news application. When a plurality of applications run at the background of the electronic device, the electronic device may further display a multitasking window not shown in FIG. 15 in a scrolling manner in response to a swiping operation performed by the user on the multitasking interface 1503.

In addition, the foregoing multitasking interface 1503 is displayed in full screen on an outer screen having a camera hole. Compared with displaying in full screen on an anomalous outer screen, an actual display area is larger, operability is higher, and human computer interaction efficiency is higher. In some embodiments, in response to an operation of selecting the multitasking window by the user, the electronic device may switch the application corresponding to the multitasking window to the foreground to run. Before the multitasking interface is displayed, an application that runs at the foreground of the electronic device is referred to as an application a, and an application that is indicated by a multitasking window that is selected on the multitasking interface is referred to as an application b. If the application a and the application b are different applications, an application window of the application a may further be displayed on the display region 601 of the outer screen when the application b runs at the foreground.

As shown in FIG. 15, during display of the multitasking interface 1503, in response to a fourth operation performed by the user on the multitasking window 1506, an application window 1507 of the news application may be displayed on the display region 602 of the outer screen. The application window 1507 displays an application interface (a fourth application interface) of the news application. In addition, after the user taps the multitasking window 1506, the electronic device may further display the application window 1502 of the takeout application in the display region 601 of the outer screen. The size of the application window 1502 is smaller than the size of the application window 1507.

It may be understood that, before the takeout service is completed, the application window of the takeout application is a specific type of application window. As shown in FIG. 15, before the takeout service is not completed, if an operation performed by the user on the application window 1502 is not detected, the application window 1502 is still displayed in the display region 601 after the preset duration.

After the takeout service is completed, the application window of the takeout application is updated to an application window of a non-specific type. In this scenario, the application window corresponding to the takeout application may be undisplayed.

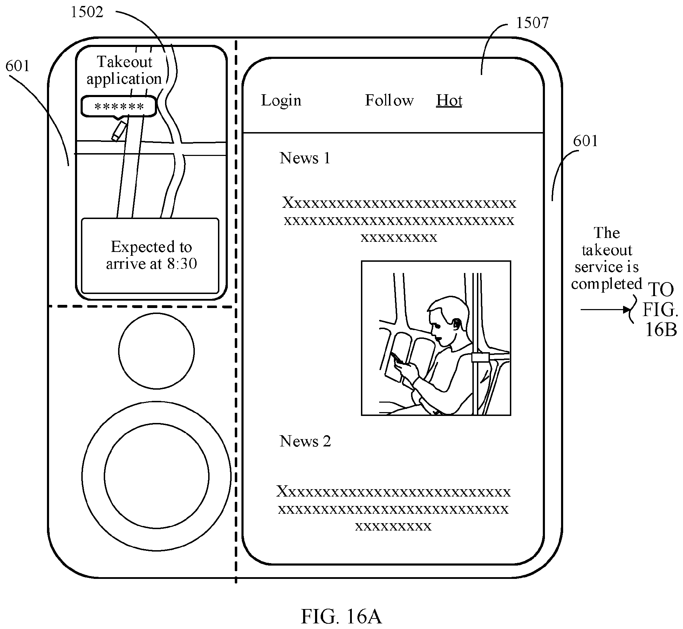

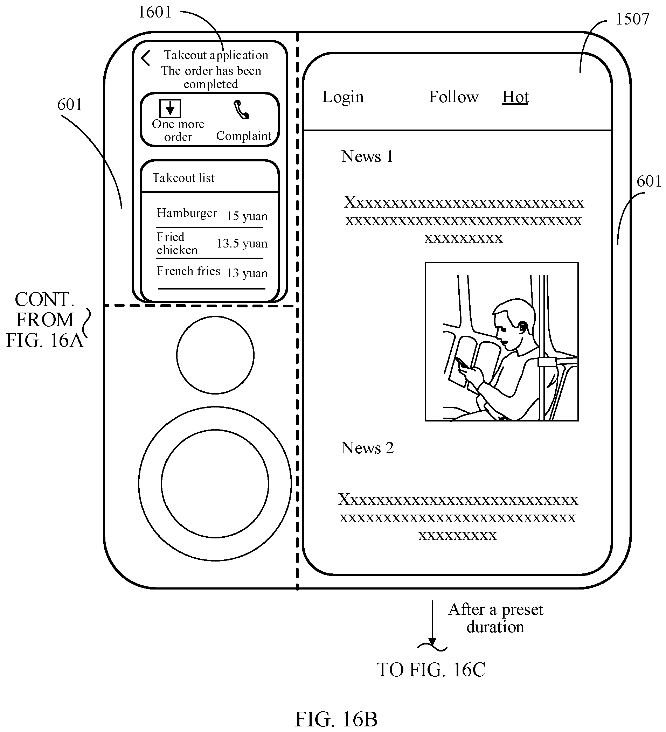

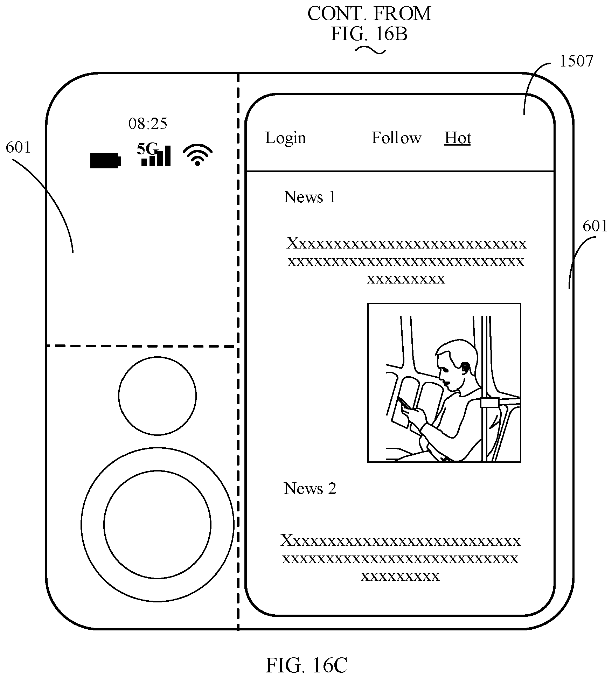

As shown in FIG. 16A, FIG. 16B, and FIG. 16C, after the takeout application completes the takeout service, a corresponding application window is updated from the application window 1502 to an application window 1601. The foregoing application window 1502 may display a dining-sending interface provided by the takeout application. The application window 1601 may display a settlement interface provided by the takeout application. The application window 1601 is also displayed in the display region 601. During display of the dining-sending interface (a first content), the dining-sending interface is kept being displayed in the display region 601. After the settlement interface (a second content) is displayed, the settlement interface in the display region 601 may be undisplayed.

After the display duration of the application window 1601 in the display region 601 reaches the preset duration, the electronic device undisplays the foregoing application window 1601.

In some embodiments, when an application runs at the foreground of the electronic device, the display region 601 of the outer screen may further display a function control related to the application.

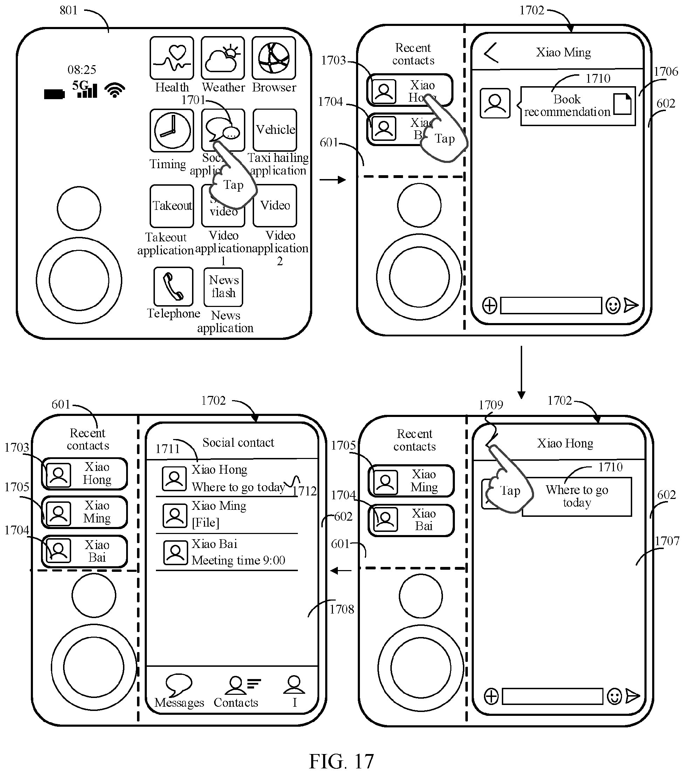

In an example scenario, as shown in FIG. 17, a main interface 801 is displayed on an outer screen. The main interface 801 includes an application icon 1701 corresponding to a social application. In response to a user tapping the application icon 1701, a social application is run at the foreground. For example, an application window 1702 corresponding to the social application may be displayed in the display region 602. The application window 1702 may display an application interface provided by the social application. For example, the application window 1702 displays a chat interface 1706 with a contact Xiao Ming.

It may be understood that the social application includes a plurality of contacts pre-configured. The social application may display chat interfaces with different contacts in response to the user operation. The foregoing plurality of contacts include a recent contact. The recent contact is a contact who has information exchange with the user within a preset time period. The foregoing information exchange refers to that the user sends information to the contact, or, the contact sends information to the user.

For example, a manner of determining the recent contact may be as follows. First, the electronic device may obtain a contact time point with each contact. The contact time point is a time point (a sending time point or a receiving time point) corresponding to the last piece of information (which may be information sent by the user to the contact, or information from the contact) from the user to the contact. For example, the preset time period may be a time period whose destination is a current time point, and whose duration is specified duration. For another example, the preset time period may alternatively be a time period between a time point at which the social application starts to run and a current time point. Secondly, a contact whose contact time point belongs to a preset time period is determined as the recent contact.

For another example, a manner of determining the recent contact may alternatively be as follows. The electronic device may obtain contact time points with various contacts, and sort contacts whose contact time points belong to the preset time period based on the contact time points. After the sorting, contacts whose contact time points are later are sorted in front. Then, contacts ranked top N are determined as recent contacts, N being a positive integer greater than 0. For example, N may be 3.

In addition, when the display region 601 does not display an application window of another application, an access control corresponding to the recent contact, namely, an example of the function control related to the social application, is displayed on the display region 601.

In addition, the access control of the recent contact is arranged in the display region 601 from top to bottom based on the contact time point. After the arrangement, a later contact time point of the recent contact indicates a higher arrangement position of the corresponding access control in the display region 601. It may be understood that when the display region 601 cannot display all the recent contacts, some of the recent contacts may be hidden. Then, the hidden recent contact may further be displayed in a scrolling manner in response to a swiping operation performed by the user in the display region 601.

For example, the recent contact includes Xiao Hong and Xiao Bai, and a control 1703 and a control 1704 are displayed in the display region 601. A contact time point corresponding to Xiao Hong is later than a contact time point of Xiao Bai. In the display region 601, a control 1703 corresponding to Xiao Hong is arranged above a control 1704 corresponding to Xiao Bai.

In addition, Xiao Ming is also the recent contact. When the chat interface 1706 (the chat interface corresponding to Xiao Ming) is displayed in the application window 1702, the access control corresponding to Xiao Ming may not be displayed.

In some embodiments, in response to a user tapping the control 1703, a display content of the application window 1702 may be updated. For example, the chat interface 1706 is undisplayed, and a chat interface 1707 with the contact Xiao Hong is displayed. Correspondingly, the control 1703 corresponding to Xiao Hong is also hidden in the display region 601, and a control 1705 corresponding to Xiao Ming is newly displayed.

In a possible scenario, if a receiving time point of the last piece of information exchange (for example, the information 1710) between the user and Xiao Ming is not within the preset duration, namely, the contact time point corresponding to Xiao Ming does not belong to the preset duration, the information exchange does not exist between the user and Xiao Ming within the preset duration. In this scenario, in response to the user tapping the control 1703, the chat interface 1706 is undisplayed on the application window 1702, and a chat interface 1707 with the contact Xiao Hong is displayed. In addition, an access control corresponding to Xiao Ming is not newly added to the display region 601.

Similarly, in response to the user tapping the control 1704, the chat interface 1706 may be undisplayed, and a chat interface with the contacts Xiao Bai is displayed. Correspondingly, a control 1704 corresponding to Xiao Bai is also hidden in the display region 601, and a control 1705 corresponding to Xiao Ming is newly displayed.

In some embodiments, the chat interface 1707 includes an exit control 1709. In response to a user tapping the exit control 1709, the chat interface 1707 may be undisplayed and a main application interface 1708 of the social application may be displayed in the application window 1702. The main application interface 1708 includes one or more access bars, and each access bar corresponds to one contact. In response to the user tapping the access bar, a chat interface corresponding to the contact is switched to be displayed in the application window 1702. In addition, a last piece of information exchanged with the contact may be displayed on the access bar.

For example, an access bar 1711 displays a last piece of information 1712 exchanged between the user and Xiao Hong. In response to the user tapping the access bar 1711, the chat interface 1707 between the user and Xiao Hong may be displayed again. The plurality of access bars are also arranged in the main application interface 1708 from top to bottom based on the contact time points of the contacts. After the arrangement, an access bar with the recent contact time point is arranged on an uppermost side.

In some embodiments, in response to the user tapping the exit control 1709 to undisplay the chat interface 1707, the electronic device may further newly add the display control 1703 in the display region 601. In the foregoing example, the social application is a fifth application. When the chat interface 1707 is displayed in the display region 602, namely, during display of the fifth application interface, the main application interface 1708 of the social application is switched to display in response to the user operation. In other words, a sixth application interface is switched to display. In this way, the sixth application interface is displayed in the display region 602, and an access control configured to access the chat interface 1707, namely, the control 1703 in FIG. 17, is displayed in the display region 601.

In some other embodiments, after the access controls of the recent contacts are sorted based on the contact time points, the electronic device may further update a ranking order of the access controls based on the messages from the contacts.

For example, if a message from another contact (for example, a contact Xiao A) is received, an access control corresponding to Xiao A may be newly added on the display region 601. The newly displayed access control is arranged above the another access control. If a message of a contact that has displayed the access control is received, for example, the message from Xiao Bai is received, the control 1704 corresponding to Xiao Bai may be set to a top.

In some other embodiments, when access controls of all recent contacts cannot be displayed in the display region 601, an access control arranged on a lower side is preferentially hidden. In the scenario, in response to a swipe-up operation performed by the user in the display region 601, the electronic device may gradually display the hidden access control, and gradually hide the access control arranged on the upper side.

In some embodiments, when the video application is run at the foreground of the electronic device, for different video applications, different display solutions may be selected. For example, the following plurality of display solutions are included.

Display solution I: The electronic device may dynamically switch a division of the display regions. For example, before the video data is not played back, the divided display regions include the display region 601 and the display region 602 shown in FIG. 6. When the video data is played in full screen, the divided display regions include the display region 604 and the display region 605 shown in FIG. 6. When the video data is played in a small window, the divided display regions include the display region 601 and the display region 602 shown in FIG. 6. In this way, display space is properly used, and playing quality of the video data is improved.

Display solution II: Based on the display solution I, when video data of a landscape screen is played in full screen, the divided display regions include the display region 604 and the display region 605 shown in FIG. 6. When video data of a portrait screen is played in full screen, the divided display regions include the display region 601 and the display region 602 shown in FIG. 6.

Display solution III: When video data that is being played is displayed in the display region 602, next video data to be played is displayed in the display region 601, thereby improving video data recommendation efficiency. In this way, the user may learn a content of the next video data recommended by the video application in advance, to determine whether to watch the next video data.

Display solution IV: When video data that is being played is displayed in the display region 602, previous video data that is already played is displayed in the display region 601, so that the user is facilitated to view the previous video data at any time, and human computer interaction efficiency of backtracking the played video by the user is improved.

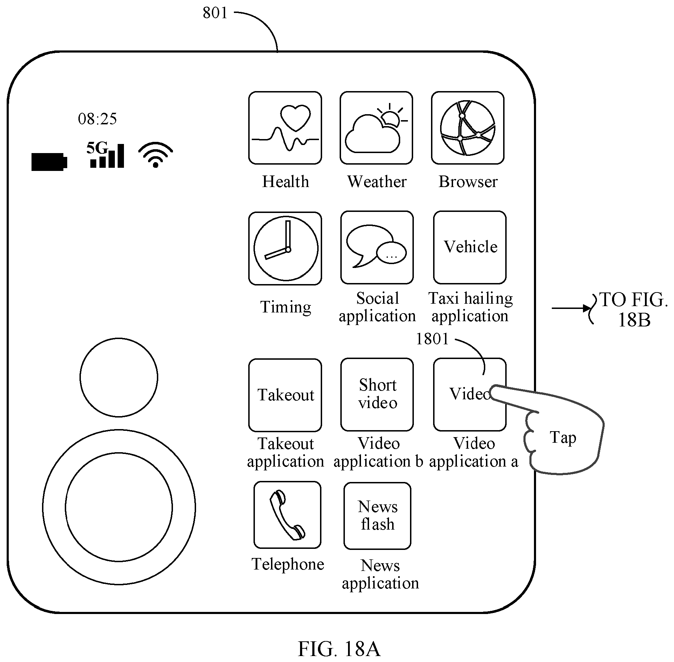

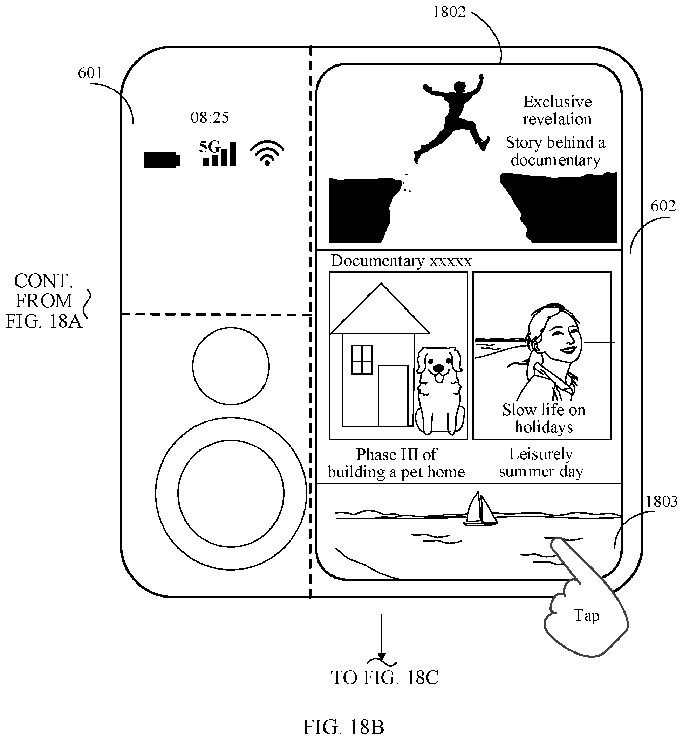

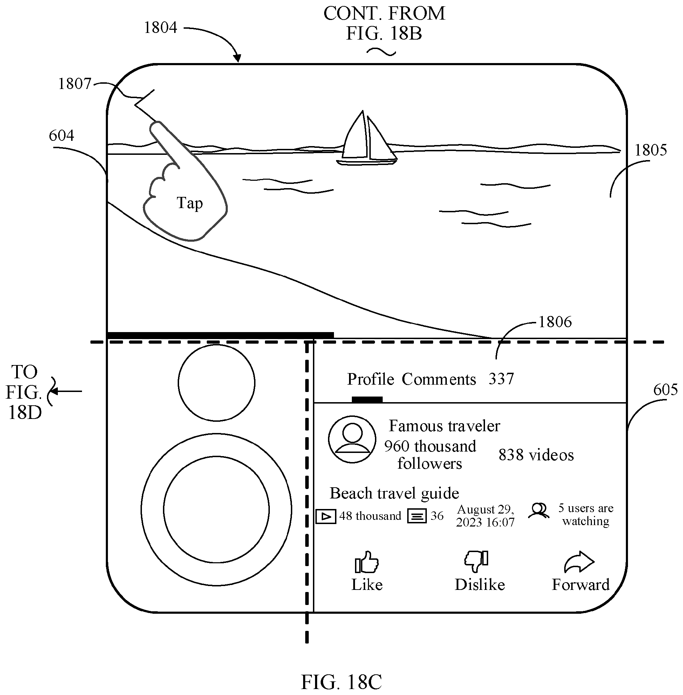

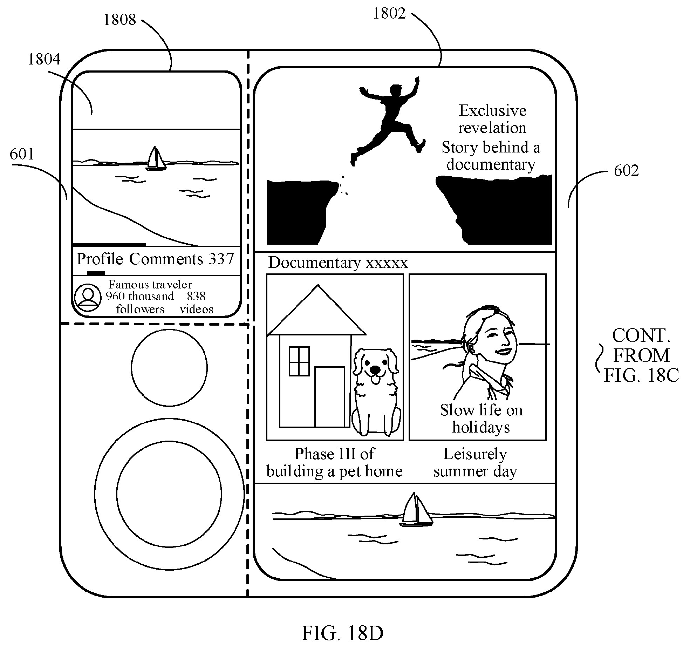

In an example scenario, as shown in FIG. 18A, FIG. 18B, FIG. 18C, and FIG. 18D, a main interface 801 displayed on the outer screen includes an application icon 1801 of a video application a. In response to a user tapping the application icon 1801, a video application a (a seventh application) is run at the foreground.

As shown in FIG. 18A, FIG. 18B, FIG. 18C, and FIG. 18D, in response to the user tapping the application icon 1801, an application window 1802 of the video application a is displayed in the display region 602 of the outer screen. The application window 1802 displays a main application interface of the video application a. The foregoing main application interface includes a plurality of pieces of recommendation cards for video data. The recommendation cards may display a cover image, a cover animation, or the like of the video data. As shown in FIG. 18A, FIG. 18B, FIG. 18C, and FIG. 18D, the application window 1802 includes a recommendation card 1803.

In response to the user tapping the recommendation card 1803, a video play interface 1804 is displayed in full screen. Video data 1805 (a fourth video) is played and related information 1806 of the video data 1805 is displayed on the foregoing video play interface 1804. The foregoing video data 1805 is video data corresponding to the recommendation card 1803.

In the foregoing example scenario, before it is detected that the user taps the recommendation card 1803, namely, before the video data is not played, the outer screen may be divided into the display region 601 and the display region 602. In this scenario, the application window 1802 is displayed in the display region 602. After it is detected that the user taps the recommendation card 1803, for example, after the video data begins to be played in full screen, the outer screen may be divided into the display region 604 and the display region 605. The foregoing display region 604 is configured to play video data 1805. The display region 605 is configured to display the related information 1806. The foregoing related information 1806 may include information about an uploader of the video data 1805 (an uploader name, a profile picture, a quantity of fans, a quantity of published videos, and the like), video information (a video name, a quantity of views, an uploading time, a quantity of viewers currently watching), information about movie comment, and the like.

It may be learned that the display space provided by the outer screen is fully used by dynamically switching the division of the display region. When the video data 1805 is played in full screen, the display space is not wasted.

In some embodiments, the electronic device may undisplay the video play interface 1804 in full screen in response to the user operation. After the video play interface 1804 in full screen is undisplayed, the video data 1805 may be displayed in a form of a small window, and is still played at the background.

As shown in FIG. 18A, FIG. 18B, FIG. 18C, and FIG. 18D, the video play interface 1804 further includes a control 1807. In response to the user tapping the control 1807, the display region 601 and the display region 602 are divided. The application window 1802 is displayed in the display region 602 again, and the application window 1802 is configured to display a main application interface (a twelfth application interface) of the video application a. An application window 1808 is displayed in the display region 601. The foregoing application window 1808 is configured to display a video play interface 1804 (an eleventh application interface). The video data 1805 and the related information 1806 in the video play interface 1804 are both displayed in the application window 1808.

In the foregoing example, the video application a is the fifth application. During a period in which the video play interface 1804 is displayed in full screen, namely, during a period in which the fifth application interface is displayed, the main application interface of the video application a is switched to be displayed in response to the user operation. In other words, the sixth application interface is switched to be displayed. The sixth application interface may be displayed in the display region 602. The fifth application interface may be displayed in the display region 601.

In some embodiments, the electronic device may restore the display of the video play interface 1804 in full screen in response to the user tapping the application window 1808. In other words, the electronic device may play the video data 1805 in the foregoing display region 604, and display the related information 1806 in the foregoing display region 605.

In some embodiments, when an operation of instructing to play another video data by the user is detected, the application window 1808 may be undisplayed. In addition, playing of the video data 1805 is paused. When the operation of instructing to play another video data by the user is not detected, the display duration of the application window 1808 in the display region 601 is not limited.

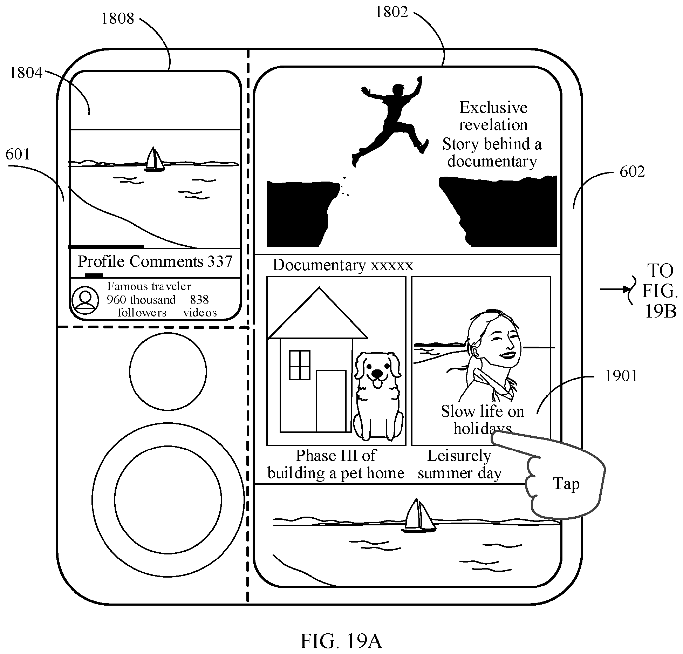

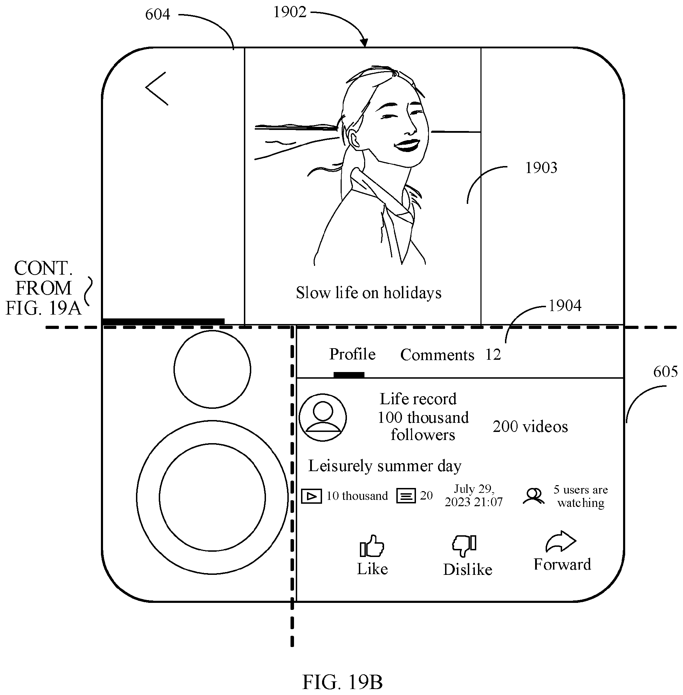

For example, as shown in FIG. 19A and FIG. 19B, the application window 1802 includes a recommendation card 1901.

In response to the user tapping the recommendation card 1901, a video play interface 1902 is displayed in full screen. Video data 1903 (a fifth video) is played and related information 1904 (video information) is displayed on the video play interface 1902. The foregoing video data 1903 is video data corresponding to the recommendation card 1901.

As shown in FIG. 19A and FIG. 19B, the electronic device may play the video data 1903 in the display region 604, and display the related information 1904 in the display region 605. The foregoing related information 1904 may include information about an uploader of the video data 1903 (an uploader name, a profile picture, a quantity of fans, a quantity of published videos, and the like), video information (a video name, a quantity of views, an uploading time, a quantity of viewers currently watching), information about movie comment, and the like.

In some embodiments, when video data of a landscape screen is played in full screen, the electronic device may divide the outer screen into the display region 604 and the display region 605, and play the video data of a landscape screen in the display region 604. When video data of a portrait screen is played in full screen, the electronic device may divide the outer screen into the display region 601 and the display region 602, and play the video data of a portrait screen in the display region 602.

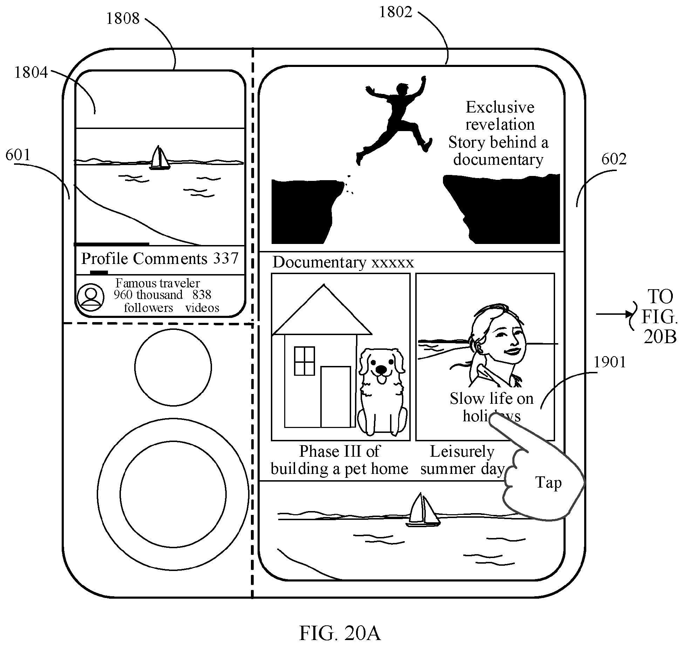

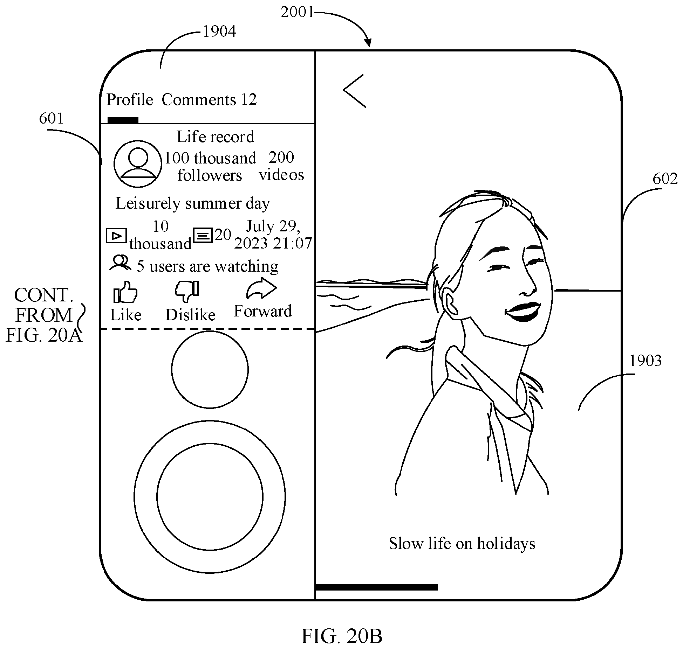

As shown in FIG. 20A and FIG. 20B, in response to the user tapping the recommendation card 1901, a video play interface 2001 is displayed in full screen. Video data 1903 is played and related information 1904 is displayed on the video play interface 2001. The foregoing video data 1903 is video data corresponding to the recommendation card 1901.

As shown in FIG. 20A and FIG. 20B, the electronic device may play the video data 1903 in the display region 602, and display the related information 1904 in the display region 601. In this way, when the video data of a portrait screen is played, waste of the display space is reduced, and watching experience of the user is improved.

In some embodiments, in response to the user tapping the related information 1904 in the display region 601, the video play interface 1902 may alternatively be displayed in full screen instead of the video play interface 2001. In this way, the user may input an evaluation content for the video data 1903 through an operation in the display region 605.

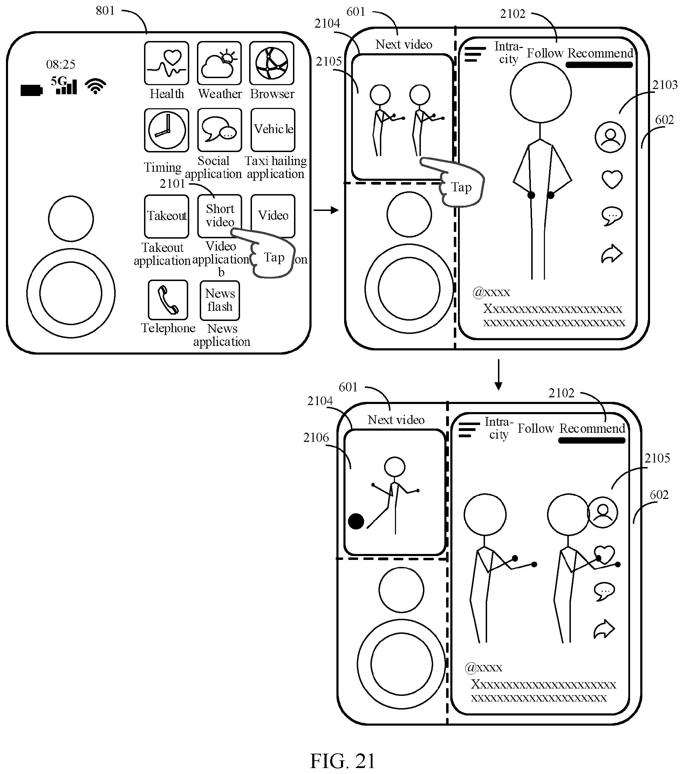

In an example scenario, as shown in FIG. 21, a main interface 801 displayed on the outer screen includes an application icon 2101 of a video application b (a sixth application). In response to a user tapping the application icon 2101, the video application b is run at the foreground.

As shown in FIG. 21, in response to the user tapping the application icon 2101, an application window 2102 of the video application b is displayed in the display region 602 of the outer screen.

It may be understood that the video application b is an application having a requirement on video data recommendation efficiency. After the video application b is started, video data that needs to be pushed to the user may be determined, and first piece of video data that needs to be pushed to the user may be played. For a process of determining the video data that needs to be recommended by the user, reference may be made to the related technology. Details are not described herein again.

As shown in FIG. 21, after a video application b is started, video data 2103 (a first video) is displayed on the application window 2102. In other words, a seventh application interface is displayed. In addition, an application window 2104 may further be displayed on a side of the application window 2102, for example, in the display region 601. The foregoing application window 2104 is configured to display video data 2105 (a second video) whose recommendation sequence is after the video data 2103. In other words, the eighth application interface is displayed.

For example, the application window 2104 may display a cover image corresponding to the video data 2105. For another example, the application window 2104 may further mute playing of the video data 2105.

In response to an operation of tapping the application window 2104 by the user or switching a next video on the application window 2102 by the user, the electronic device may play the video data 2105 in the application window 2102. In other words, a ninth application interface is displayed. In addition, video data 2106 (a third video) whose recommendation sequence is after the video data 2105 is switched to be displayed in the application window 2104. In other words, a tenth application interface is displayed.

In some embodiments, if it is not detected that the user taps the application window 2104, after playback of the video data 2103 is completed, the video data 2103 may also be played in the application window 2102. In addition, video data 2106 whose recommendation sequence is after the video data 2105 is switched and displayed in the application window 2104.

In some other embodiments, the application window 2104 may further display previous video data that has been played. In this way, when the user taps the application window 2104, the electronic device may further play back the previous video data in the application window 2102, to quickly trace back to the previous video.

For example, the electronic device plays the video data 2103 on the application window 2102. In response to an end of playing of the video data 2103, the video data 2105 is switched to be played in the application window 2102. In addition, the video data 2103 (a previous video played completely) is displayed in the application window 2104.

For another example, the electronic device plays the video data 2103 on the application window 2102. During playing, it is detected that a user instructs to play a next video. For example, a swipe-up operation performed by the user in the application window 2102 is detected. Alternatively, next video data may be played in the application window 2102, and the video data 2103 is displayed in the application window 2104.

In the foregoing example, FIG. 18A, FIG. 18B, FIG. 18C, and FIG. 18D to FIG. 20A and FIG. 20B show a video application using the display solution I or the display solution II, and FIG. 21 shows a video application using the display solution III. It may be understood that a developer of the video application may pre-configure the display solution enabled by the video application, so that an expected display effect can be achieved in a running process of video applications of various types.

In some embodiments, the electronic device displays a plurality of application windows on the outer screen and switches between a plurality of application windows, thereby improving human computer interaction efficiency for a plurality of applications. In an actual application, an interface jump caused by an accidental touch may further be resolved by using a manner of being capable of switching between the plurality of application windows.

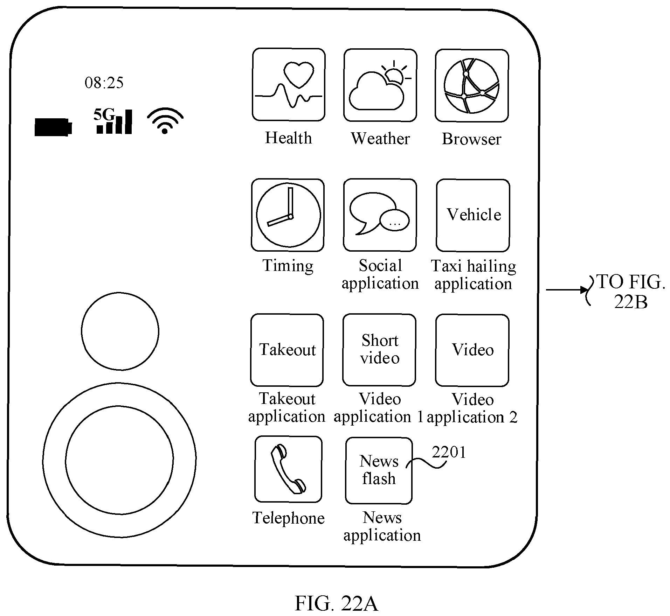

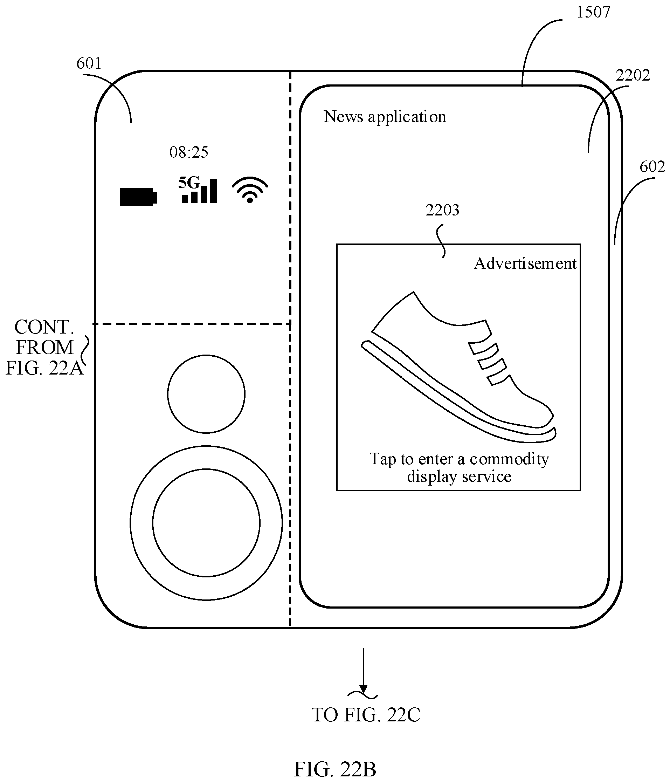

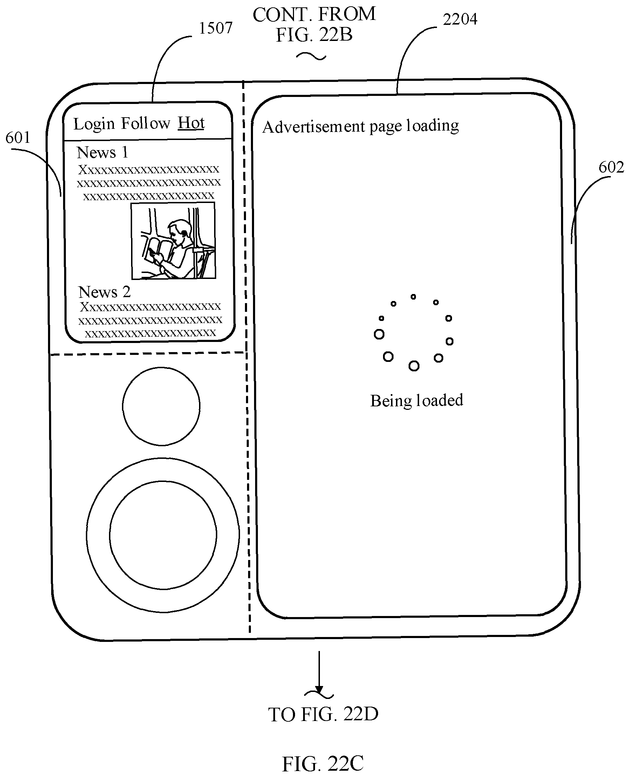

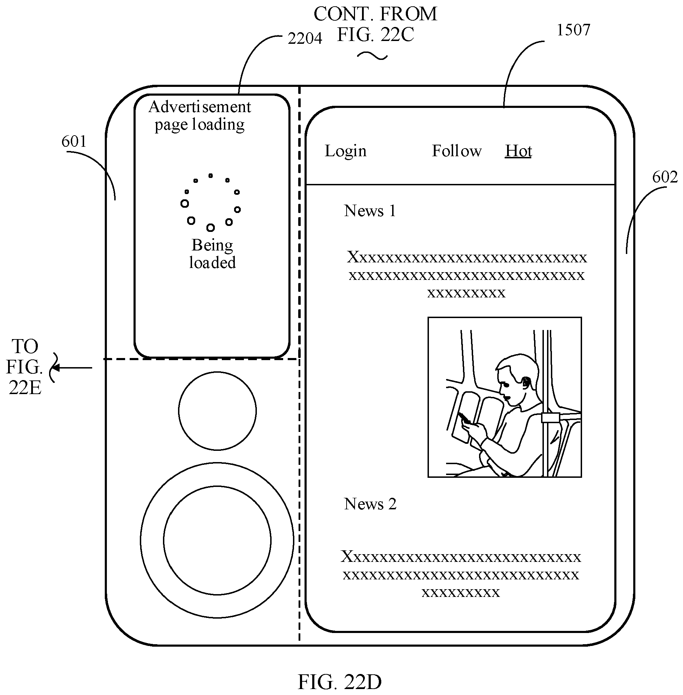

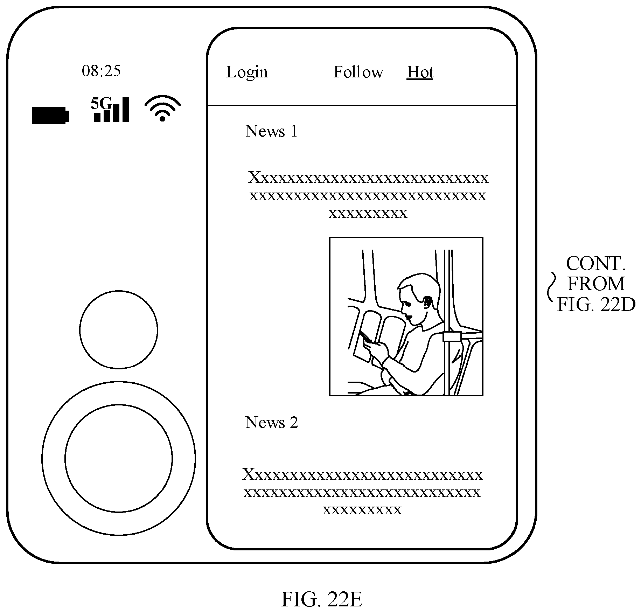

As shown in FIG. 22A, FIG. 22B, FIG. 22C, FIG. 22D, and FIG. 22E, a main interface 801 displayed on the outer screen includes an application icon 2201 of a news application. In response to a user tapping the application icon 2201, the news application is started. Correspondingly, an application window 1507 corresponding to the news application may be displayed in the display region 602. The foregoing application window 1507 may be configured to display an application interface of the news application. It may be understood that, in a process of starting the news application, the application window 1507 may display a loading interface 2202 of the news application. An advertisement content 2203 may be displayed on the foregoing loading interface 2202.

During display of the loading interface 2202, if a user accidentally touches the advertisement content 2203, an application window 2204 corresponding to the advertisement application (an application indicated by the advertisement content 2203) may be displayed in the display region 602. In addition, in response to the user accidentally touching the advertisement content 2203, the electronic device may switch the news application to a background for running. Correspondingly, the application window 1507 of the news application may be gradually zoomed out and moved to the display region 601.

In this scenario, the user may immediately tap the display region 601, to instruct the electronic device to switch the news application back to a state in which the news application runs at the foreground. As shown in FIG. 22A, FIG. 22B, FIG. 22C, FIG. 22D, and FIG. 22E, in response to the user tapping the display region 601, display positions of the application window 1507 and the application window 2204 are swapped. For example, an application window 2204 is zoomed out, and the application window 2204 is moved from the display region 602 to the display region 601. In addition, the application window 1507 may further be zoomed in, and the application window 1507 is moved from the display region 601 to the display region 602. After the display positions of the application window 1507 and the application window 2204 are swapped, the advertisement application is controlled to enter the background to run (for example, switched into the background in a visual form), and the news application keeps running at the foreground. In this way, the user may still use the news application.

In addition, to prevent the advertisement application from interfering with the user, after the application window 2204 is moved to the display region 601, the user may further instruct to undisplay the application window 2204. As shown in FIG. 22A, FIG. 22B, FIG. 22C, FIG. 22D, and FIG. 22E, in response to the swipe-up operation performed by the user in the display region 601 relative to the application window 2204, the application window 2204 corresponding to the advertisement application is undisplayed.

It may be learned that, in a process of enabling the news application, even if the user accidentally touches an advertisement, the electronic device may switch the news application back to the foreground to run only through swap of the application window without switching the interface, thereby ensuring that the user can still normally use the news application, and improving human computer interaction efficiency when the user deals with the accidental touch.

In a possible implementation, during display of the loading interface 2202, if the user accidentally touches the advertisement content 2203, the application window 2204 corresponding to the advertisement application (an application indicated by the advertisement content 2203) may be directly displayed in the display region 601. After a period of time, the application window 2204 automatically disappears.

The foregoing embodiment describes that, when the outer screen is divided into the display region 601 and the display region 602, the application interface of the application running at the foreground is displayed through the display region 602, and another type of interactive object is displayed through the display region 601. In an actual application process, the foregoing display region 601 may further simultaneously display a plurality of types of interactive objects, thereby improving a utilization rate of the display region 601.

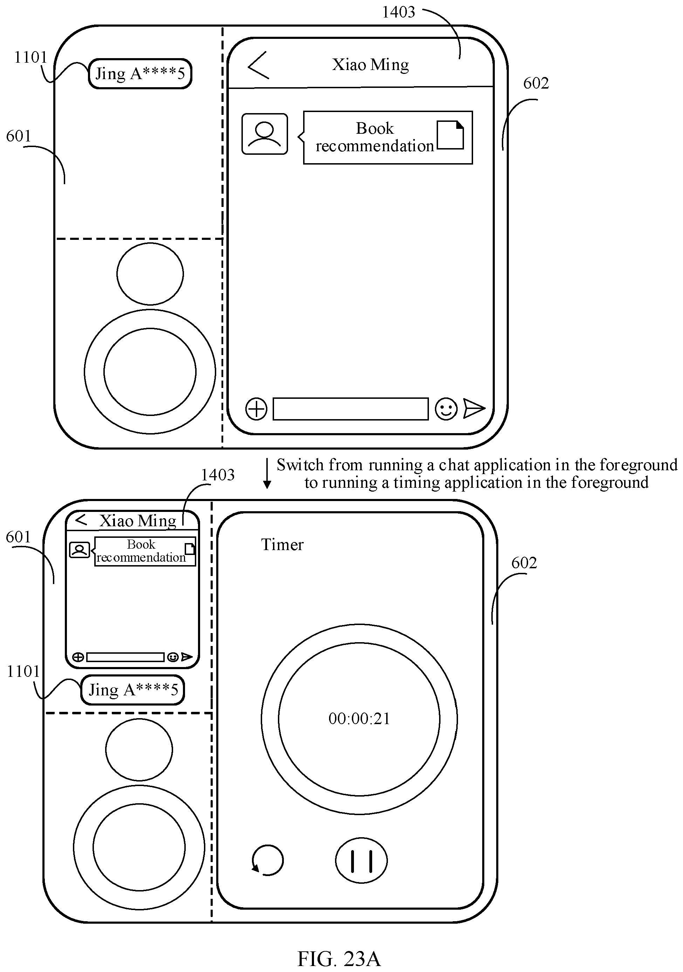

In an example scenario, as shown in FIG. 23A, when a capsule 1101 is displayed in a display region 601 and an application window 1403 of a social application is displayed in a display region 602, the social application runs at the foreground. If the electronic device switches the social application running at the foreground to a timer application in response to a user operation, the application window 1403 corresponding to the social application is newly displayed while the capsule 1101 is kept displaying in the display region 601. The foregoing capsule 1101 and the application window 1403 may be arranged in chronological order of appearing in the display region 601. In addition, after the application window 1403 is displayed for the preset duration, the electronic device may further undisplay the application window 1403.

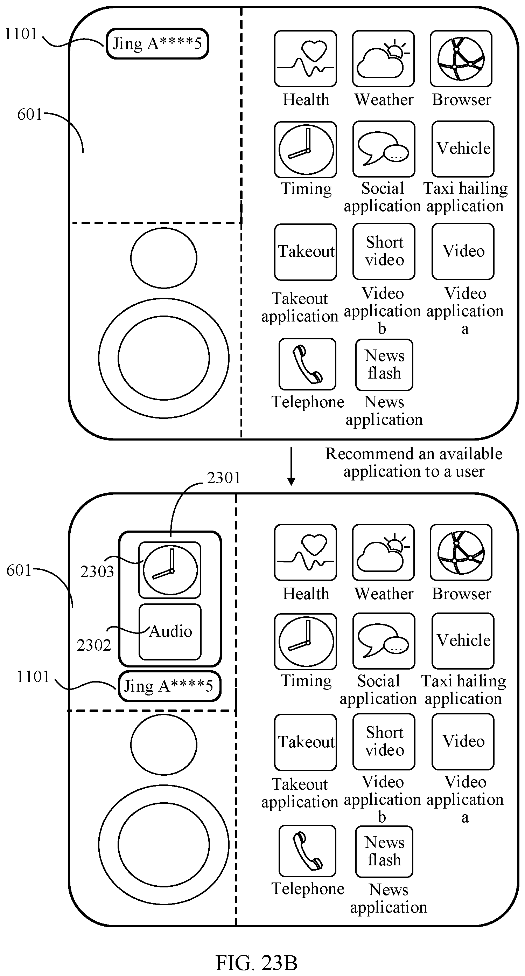

In an example scenario, as shown in FIG. 23B, when the capsule 1101 is displayed in the display region 601, if the electronic device determines that available applications such as a timing application and a music application need to be recommended to the user, an application recommendation bar 2301 is newly displayed in the display region 601 while the capsule 1101 is reserved to be displayed in the display region 601. The application recommendation bar 2301 includes icons of recommended applications such as an icon 2302 of the music application and an icon 2303 of the timing application.

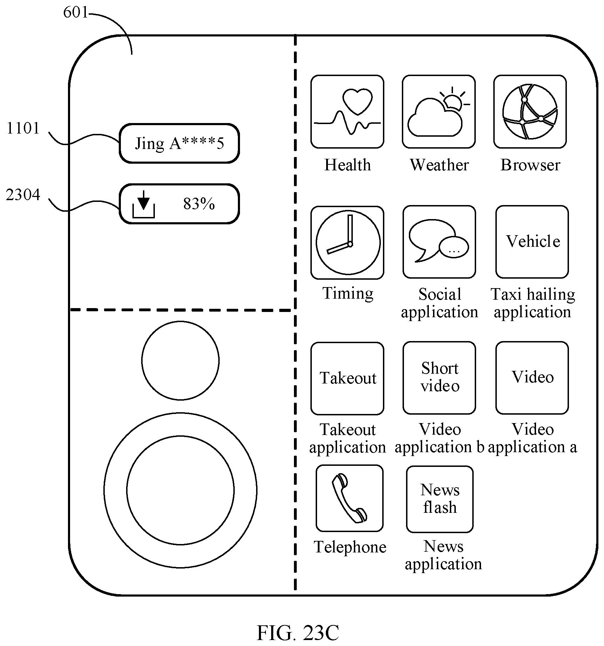

In an example scenario, as shown in FIG. 23C, when the capsule 1101 is displayed in the display region 601, another state capsule, for example, the capsule 2304 indicating a download progress, may further be displayed.

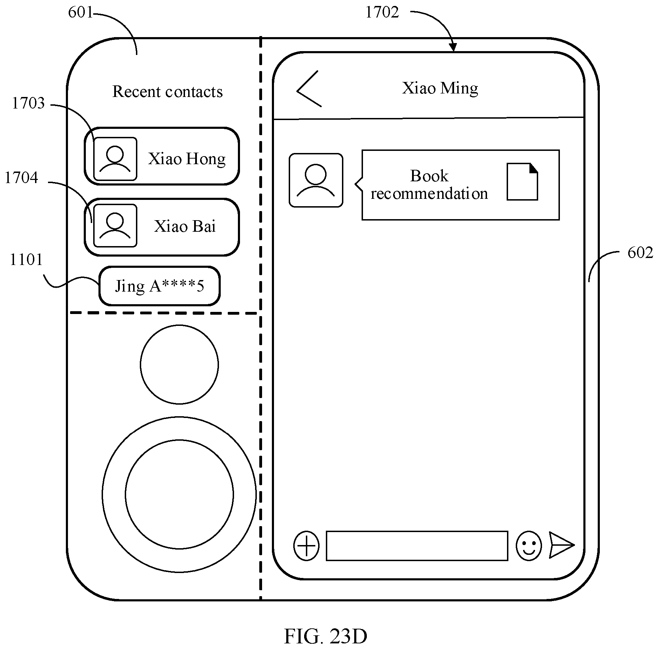

In an example scenario, as shown in FIG. 23D, when the capsule 1101 is displayed in the display region 601, a social application is run at the foreground, and an application window 1702 is displayed in the display region 602. In addition, an access control corresponding to a recent contact may be further displayed in the display region 601, for example, a control 1703 corresponding to Xiao Hong and a control 1704 corresponding to Xiao Bai.

In other words, when the first display object of the second application is displayed in the display region 601, a second display object of another application (an eighth application) may further be displayed. The first display object and the second display object may be of the same type or may be of the different types. This is not specifically limited in this embodiment of this application.

An embodiment of this application further provides an electronic device. The electronic device may include a memory and one or more processors. The memory is coupled to the processor. The memory is configured to store computer program code. The computer program code includes a computer instruction. The computer instruction, when executed by the processor, may cause the electronic device to perform steps in the foregoing embodiment. Certainly, the electronic device includes but is not limited to the foregoing memory and one or more processors.

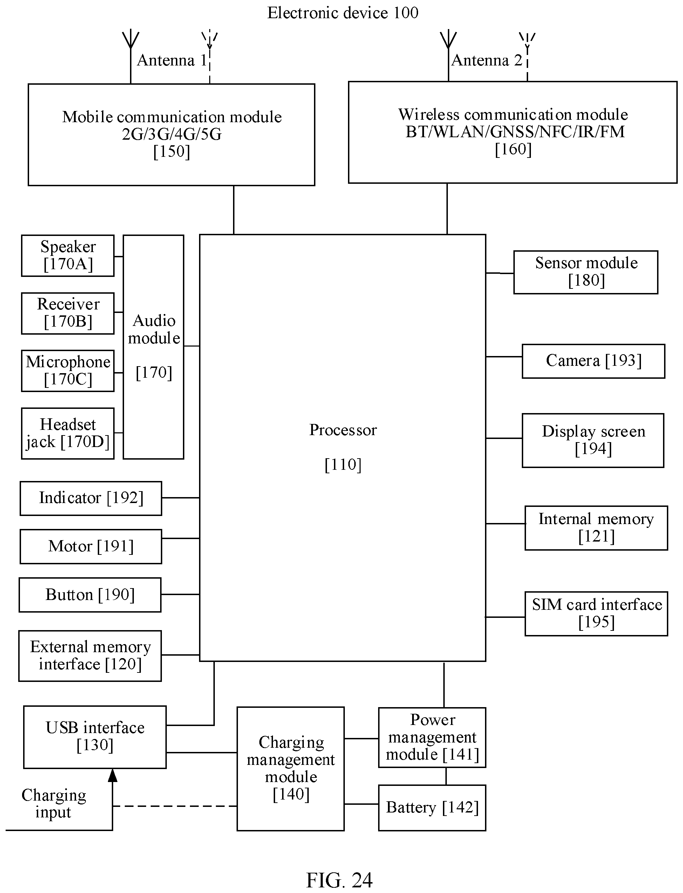

Refer to FIG. 24. FIG. 24 shows a schematic diagram of a possible hardware structure of an electronic device.

As shown in FIG. 24, the electronic device 100 may include a processor 110, an external memory Interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identity module (subscriber identification module, SIM) card interface 195, and the like.

The foregoing sensor module 180 may include sensors such as a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, and a bone conduction sensor.

It may be understood that the structure shown in this embodiment constitutes no specific limitation on the electronic device 100. In some other embodiments, the electronic device 100 may include more or fewer components than those shown in the figure, or some merged components, or some split components, or different component arrangements. The components in the figure may be implemented by hardware, software or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device 100. The controller may generate an operation control signal based on instruction operation code and a sequence signal, and control obtaining and executing of an instruction.

A memory may be further arranged in the processor 110, which is configured to store an instruction and data. In some embodiments, the memory in the processor 110 is a cache memory. The memory may store the instruction or the data that has just been used or recycled by the processor 110. If the processor 110 needs to use the instruction or the data again, the processor may directly invoke the instruction or the data from the memory. Repeated access is avoided, and waiting time of the processor 110 is reduced, thereby improving system efficiency.

In some embodiments, the processor 110 may include one or more interfaces. The interface may include an integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that a schematic interface connection relationship between the modules in embodiments is merely an example for description, and constitutes no limitation on the structure of the electronic device 100. In some other embodiments, the electronic device 100 may alternatively use an interface connection manner different from that in the foregoing embodiment, or use a combination of a plurality of interface connection manners.

The electronic device 100 implements a display function through the GPU, the display screen 194, the application processor, and the like. The GPU is a microprocessor for image processing and is connected to the display screen 194 and the application processor. The GPU is configured to perform mathematical and geometric calculations for graphics rendering. The processor 110 may include one or more GPUs that execute a program instruction to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a miniLED, a microLED, a micro-OLED, a quantum dot light emitting diode (quantum dot light emitting diodes, QLED), or the like.

The electronic device 100 may implement a photographing function through the ISP, the camera 193, the video codec, the GPU, the display screen 194, the application processor, and the like.

The ISP is configured to process data fed back by the camera 193. For example, during photographing, a shutter is enabled. Light is transmitted to a photosensitive element (an image sensor) of the camera through a lens, and an optical signal is converted into an electrical signal. The photosensitive element of the camera transmits the electrical signal to the ISP for processing, and the electrical signal is converted into an image visible to a naked eye. The ISP may further perform algorithm optimization on a noise point, a brightness, and a skin tone of the image. The ISP may further optimize parameters such as an exposure and a color temperature of scenario for which an image is to be taken. In some embodiments, the ISP may be arranged in the camera 193.

The camera 193 is configured to capture a static image or a video. An optical image is generated for an object through the lens and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP, to convert the electrical signal into a digital image signal. The ISP outputs the digital image signal to the DSP for processing. The DSP converts the digital image signal into an image signal in a standard format such as RGB or YUV. In some embodiments, the electronic device 100 may include N cameras 193, N being a positive integer greater than 1.

The digital signal processor is configured to process a digital signal. In addition to a digital image signal, the digital signal processor may further process another digital signal. For example, when the electronic device 100 performs frequency selection, the digital signal processor is configured to perform Fourier transform, and the like on frequency energy.

The video codec is configured to compress or decompress a digital video. The electronic device 100 may support one or more video codecs. In this way, the electronic device 100 may play or record videos in a plurality of encoding formats, for example, moving picture experts group (moving picture experts group, MPEG) 1, MPEG2, MPEG3, MPEG4, and the like.

The NPU is a neural-network (neural-network, NN) computing processor that processes input information rapidly by referring to a structure of a biological neural network, for example, by referring to a transmission mode between human brain neurons, and can further perform self-learning continuously. Applications such as intelligent cognition of the electronic device 100, for example, image recognition, facial recognition, speech recognition, and text understanding, may be implemented through the NPU.

An embodiment of this application further provides a chip system. The chip system is applicable to the electronic device in the foregoing embodiments. The chip system includes at least one processor and at least one interface circuit. The processor may be a processor in the foregoing electronic device. The processor may be interconnected to the interface circuit through a line. The processor may receive a computer instruction from the memory of the foregoing electronic device through the interface circuit and execute the computer instruction. When the computer instruction is executed by the processor, the electronic device may be enabled to perform the steps in the foregoing embodiments. Certainly, the chip system may further include other discrete devices. This is not specifically limited in this embodiment of this application.

In some embodiments, through the descriptions of the foregoing implementations, a person skilled in the art may clearly understand that, for the purpose of convenient and brief description, only division of the foregoing functional modules is used as an example for description. In an actual application, the foregoing functions may be allocated to and completed by different functional modules as required. In other words, an internal structure of an apparatus is divided into different functional modules to complete all or some of the functions described above. For a specific working process of the system, apparatus, and unit described above, reference may be made to the corresponding processes in the above method embodiments. Details are not described herein.

In this embodiment of this application, functional units in embodiments may be integrated into one processing unit, or each of the units may exist alone physically, or two or more units may be integrated into one unit. The integrated unit may be implemented in the form of hardware, or may be implemented in the form of a software function unit.

When the integrated unit is implemented in the form of a software functional unit and sold or used as an independent product, the integrated unit may be stored in a computer-readable storage medium. Based on such an understanding, the technical solutions of embodiments of this application essentially, or the part contributing to the related art, or all or some of the technical solutions may be implemented in the form of a software product. The computer software product is stored in a storage medium and includes a plurality of instructions for instructing a computer device (which may be a personal computer, a server, a network device, or the like) or a processor to perform all or some of the steps of the methods described in embodiments of this application. The foregoing storage medium includes any medium that can store program code, such as a flash memory, a removable hard disk, a read-only memory, a random access memory, a disk, or a compact disc.

The above descriptions are merely specific implementations of embodiments of this application, but the protection scope of embodiments of this application is not limited thereto. Any variation or replacement within the technical scope disclosed in embodiments of this application shall fall within the protection scope of embodiments of this application. Therefore, the protection scope of embodiments of this application shall be subject to the protection scope of the claims.

## Claims

1. A display control method, applied to a foldable electronic device, wherein after the electronic device is folded, a first display screen of the electronic device is visible, and the method comprises:
displaying a first application interface of a first application on a first display region of the first display screen, and displaying a first display object corresponding to a second application on a second display region of the first display screen, wherein the first display region and the second display region are different display regions on the first display screen, and the first display object comprises a state capsule, an icon, or a second application interface corresponding to the second application; and
moving, in response to a first operation performed by a user on the first display object, the first application interface from the first display region to the second display region, and displaying the second application interface of the second application in the first display region, wherein
after a preset duration or upon completion of execution of a service corresponding to the first application, the first application is switched to a background for running.

2. The method according to claim 1, wherein after the displaying the second application interface of the second application in the first display region, the method further comprises:
displaying a first push information from a third application; and
moving, in response to a second operation performed by the user on the first push information, the second application interface to the second display region, and displaying a third application interface of the third application in the first display region.

3. The method according to claim 1, wherein when the first display object is a state capsule of the second application, the first operation performed on the first display object comprises:
tapping the state capsule of the second application; and
displaying a state card corresponding to the second application in response to the tapping of the state capsule of the second application, and then tapping the state card of the second application.

4. The method according to claim 2, wherein after the moving the second application interface to the second display region, the method further comprises:
swapping, in response to a third operation performed by the user on the second display region, display positions of the second application interface and the third application interface; or
undisplaying, in response to the third operation performed by the user on the second display region, the third application interface, displaying a state card corresponding to the third application in the second display region, and moving the second application interface to the first display region.

5. The method according to claim 4, wherein a display space of the first display region is larger than a display space of the second display region, and the swapping display positions of the second application interface and the third application interface comprises: increasing a display size of the second application interface in a process of moving the second application interface from the second display region to the first display region; and
reducing a display size of the third application interface in a process of moving the third application interface from the first display region to the second display region.

6. The method according to claim 2, wherein after the moving the second application interface to the second display region, the method further comprises:
undisplaying the second application interface after the preset duration; or
undisplaying the second application interface after a display content of the second application interface changes from a first content to a second content, wherein the first content and the second content are contents displayed at different nodes of a service being executed by the second application, and a node corresponding to the second content indicates an end of the execution of the service.

7. The method according to claim 6, wherein if the service being executed by the second application is a state-updatable service, after the second application interface is canceled, the method further comprises:
displaying a state capsule corresponding to the second application in the second display region, wherein the state capsule displays state information during the execution of the service by the second application.

8. The method according to claim 2, wherein after the moving the second application interface to the second display region, the method further comprises:
fixedly displaying, in response to a swipe-down operation performed by the user relative to the second application interface, the second application interface in the second display region.

9. The method according to claim 1, wherein after the displaying the second application interface of the second application in the first display region, the method further comprises:
displaying a multitasking interface in response to a user operation, wherein the multitasking interface comprises a first task window corresponding to a fourth application, the first task window comprises an application interface thumbnail corresponding to the fourth application, and the fourth application is an application running in the background; and
displaying, in response to a fourth operation performed by the user on the first task window, a fourth application interface of the fourth application in the first display region, and displaying the second application interface in the second display region.

10. The method according to claim 1, further comprising:
running a fifth application in a foreground in response to an operation performed by the user, and displaying a fifth application interface corresponding to the fifth application in the first display region;
switching, in response to the operation performed by the user, the fifth application interface in the first display region to a sixth application interface from the fifth application; and
displaying the fifth application interface in the second display region, or displaying an access control corresponding to the fifth application interface.

11. The method according to claim 10, wherein the fifth application is a social application, the fifth application interface is a chat interface with contacts, and the switching, in response to the operation performed by the user, the fifth application interface in the first display region to a sixth application interface from the fifth application comprises:
displaying, in response to an operation of instructing to exit the chat interface by the user, the sixth application interface in the first display region, wherein the sixth application interface is a main application interface of the social application.

12. The method according to claim 10, wherein the fifth application is a video application, the fifth application interface is an interface on which a video is being played, and the sixth application interface is another application interface provided by the video application.

13. The method according to claim 1, further comprising:
displaying, in response to an operation performed by the user, a seventh application interface corresponding to a sixth application in the first display region, wherein the sixth application is an application providing a video push service, and the seventh application interface is an interface for playing a first video;
displaying an eighth application interface in the second display region, wherein the eighth application interface comprises a second video;
displaying a ninth application interface in the first display region after playback of the first video is completed or after an operation of instructing to play a next video by the user is detected, wherein the ninth application interface is an interface for playing the second video; and
displaying a tenth application interface in the second display region, wherein the tenth application interface comprises a third video, and the third application interface is video data that needs to be recommended to the user after playback of the second video is completed.

14. The method according to any one of claims 1 to 13, wherein when the first display screen is configured with a camera hole for a camera to be embedded, the first display screen is divided into the first display region, the second display region, and a third display region, the third display region is a display region comprising the camera hole, neither the first display region nor the second display region comprises the camera hole, the second display region is located on an upper side or a lower side of the third display region, and the first display region is located on a right side or a left side of the second display region and the third display region.

15. The method according to claim 14, further comprising:
running a seventh application in the foreground in response to the operation performed by the user, wherein the seventh application is an application that provides a video playback service;
playing a fourth video in full screen on the first display screen in response to the operation performed by the user;
displaying, in response to an operation of instructing to exit playback by the user, an eleventh application interface for playing the fourth video in the second display region, and displaying a twelfth application interface of the seventh application in the first display region, wherein the twelfth application interface comprises a plurality of push cards for the video data; and
undisplaying, in response to tapping a push card of the fifth video by the user, the eleventh application interface in the second display region, and playing the fifth video in full screen.

16. The method according to claim 15, wherein the playing a fourth video in full screen on the first display screen comprises:
playing the fifth video in the first display region when the fifth video is video data of a portrait screen, and displaying video information of the fifth video in the second display region; and
playing, when the fifth video is video data of a landscape screen, the fifth video in a fifth display region, and displaying video information of the fifth video in a fourth display region, wherein the first display screen is re-divided into the third display region, the fourth display region, and the fifth display region, the fourth display region is located on the right side or the left side of the third display region, and the fifth display region is located on an upper side or a lower side of the fourth display region and the third display region.

17. The method according to claim 2, wherein after the moving the second application interface to the second display region and the displaying a third application interface of the third application in the first display region, the method further comprises:
undisplaying the second application interface in response to a swipe-up operation performed by the user relative to the second application interface.

18. The method according to claim 1, wherein when the first display object corresponding to the second application is displayed in the second display region, a second display object of an eighth application is further displayed in the second display region, and the eighth application is another application other than the second application.

19. An electronic device, comprising a first display screen, a processor, and a memory, wherein the first display screen is configured to display a user interface after the electronic device is folded, the memory is configured to store a computer instruction, and the computer instruction, when executed by the processor, causes the electronic device to perform the method according to any one of claims 1 to 18.

20. A computer-readable storage medium, comprising a computer program or an instruction, wherein the computer program or the instruction, when executed on a computer, cause the computer to perform the method according to any one of claims 1 to 18.
